# EUROPEAN PATENT SPECIFICATION

(11) **EP 2 853 459 B1**
(45) Date of publication and mention of the grant of the patent: **17.06.2020**
(21) Application number: 14185231.9
(22) Date of filing: 17.09.2014
(51) Int. Cl.: B60L 50/51, B60L 58/10, B60W 30/18, B60L 7/16, H02P 3/14, H02P 6/00, B60L 15/20, B60L 50/50

(54) **Apparatus, vehicle, and method for operating vehicle**
Vorrichtung, Fahrzeug und Verfahren zum Betrieb von Fahrzeugen
Appareil, véhicule et procédé de fonctionnement de véhicule

(30) Priority: 18.09.2013 CN 201310429818
(43) Date of publication of application: 01.04.2015
(73) Proprietor: General Electric Company, Schenectady, NY 12345 (US)
(72) Inventor: Lu, Xi, Pudong Shanghei 201203 (CN); Li, Fei, Pudong Shanghai 201203 (CN); Zhou, Jian, Pudong Shanghai 201203 (CN); Qiu, Hai, 201203 Pudong (CN); Zhou, Ronghui, 201203 Pudong (CN); Shen, Xiangming, Pudong Shanghai 201203 (CN); Sun, Fengcheng, Pudong Shanghai 201203 (CN)
(74) Representative: Dennemeyer & Associates S.A.

(56) References cited:
- EP-A1- 2 597 772
- US-A- 5 309 073
- US-A1- 2010 206 100
- US-A1- 2011 025 236

## Description

### BACKGROUND

Embodiments of the disclosure relate generally to an apparatus, a vehicle and a method, and particularly to a power recovering and baking method used in electric tractors, electric forklifts and other vehicles.

As a mobile machine, a vehicle is generally designed and specifically configured to transport people or cargo from one place to another. Typical vehicles comprise bicycles, motorcycles, cars/sedans, trucks, haulage motors, tractors, forklifts, buses, ships and air crafts, etc. Traditionally, at least some of vehicles are provided power by engines, e.g. internal combustion engines which burn fuels during operations, for example, diesel, gasoline or natural gas, and convert the power generated by burning fuels into a form of mechanical driving force to drive vehicles moving. However, there are some problems during using diesel , gasoline, natural gas and other resources, which include unrenewable, higher cost and negative impact on environment. Accordingly, developing an electric driving vehicle, for example, a pure electric vehicle, a hybrid electric vehicle, a plug-in hybrid electric vehicle, a pure electric tractor, a pure electric forklift, etc., gradually becomes a hot research.

To improve the range of the above described varieties of vehicles, the electric motor used in a vehicle is generally arranged to operate in multiple modes, for example, one working mode is normal driving mode and another is regenerative braking mode. Specially, in the regenerative braking mode, the electric motor may be arranged to convert a vehicle traveling mechanical power/torque to an electric power, then under the effect of the control system, the energy source (e.g., a rechargeable battery, a super capacitor, etc.) is charged in the vehicle, thus a portion of power is regenerated. Whereas, the present existing technology is that the energy source in a vehicle may not receive all power generated by regenerative braking in some working environments (e.g. adequate electricity). In this situation, other physic braking devices, e.g. mechanical braking device to dissipate mechanical power, are commonly used. Herein results in questions: relative to various state of charges of an energy source, various braking forces need to be supplied to this mechanical braking device, to worsen the vehicle handling. Moreover, in some cases, such as a case of full charge energy source, operating regenerative braking, for instance, neutral position braking or power output device quick braking, may also bring security issues.

Examples of relevant prior art are given by patent publications US5309073 A 1994-05-03 and EP2597772 A1 2013-05-29.

Accordingly, it is desirable to provide an improved apparatus, vehicle and method to solve at least one of the above-mentioned technical problems or technical requirements of the present existing vehicle.

### BRIEF DESCRIPTION

An apparatus is provided. The apparatus includes an energy source and an electric drive system. The energy source is configured to provide electrical power during discharging mode of operation and receive electrical power during charging mode of operation. The electric drive system includes a converter, at least one motor and a controller. The converter is coupled to the energy source. The converter is configured to convert the electrical power received from the energy source into drive electrical power, and configured to convert regenerative electrical power into charge electrical power for charging the energy source. The motor is coupled to the converter. The motor is configured to receive the drive electrical power provided from the converter and provide mechanical power for driving at least one load in drive mode of operation, and configured to convert mechanical power from the load into the regenerative electrical power in regenerative mode of operation. The controller is coupled to the energy source, converter and the motor. The controller is configured to receive at least one first parameter indicating charging status of the energy source, and configured to receive at least one second parameter indicating operation condition of the at least one motor. The controller is configured to send control signals to the converter, based at least in part on a braking command, the at least one first parameter, and the at least one second parameter to allow the electric drive system to controllably generate loss power resulting from the regenerative power.

A vehicle is provided. The vehicle includes an energy source, a converter, at least one motor and a controller. The energy source is configured to provide electrical power during discharging mode of operation and receive electrical power during charging mode of operation. The converter is coupled to the energy source. The converter is configured to convert the electrical power received from the energy source into drive electrical power, and configured to convert regenerative electrical power into charge electrical power for charging the energy source. The motor is coupled to the converter. The motor is configured to receive the drive electrical power provided from the converter and provide mechanical power for driving at least one load, and configured to convert mechanical power from the load into the regenerative electrical power. The controller is coupled to the energy source, converter, and at least one motor. The controller is configured to send first control signals to the converter, based at least in part on a first braking command, to allow a first target braking power corresponding to the first braking command to be solely charged into the energy source. The controller is further configured to send second control signals to the converter, based at least in part on a second braking command, to allow a second target braking power corresponding to the second braking command to be partly charged into the energy source and partly dissipated by the at least one motor.

A method for operating a vehicle is provided. The method includes receiving a target braking torque for a motor of the vehicle, generating a target braking power based at least in part on the target braking torque, and distributing the target braking power into a target loss power depending on charging status of an energy storage of the vehicle. The method further includes calculating reference commands based at least in part on the target loss power, and implementing a control for generating control signals based at least in part on the reference commands to allow the target loss power to be dissipated by an electric drive system of the vehicle.

### BRIEF DESCRIPTION OF THE DRAWINGS

These and other features and aspects of the present invention will become better understood when the following detailed description is read with reference to the accompanying drawings in which like characters represent like parts throughout the drawings, wherein:
FIG. 1 is a schematic block diagram of a vehicle according to an embodiment;
FIG. 2 is a schematic block diagram of the vehicle according to another embodiment;
FIG. 3 is a schematic block diagram of the vehicle according to another embodiment;
FIG. 4 is a schematic block diagram of the vehicle according to another embodiment;
FIG. 5 is a schematic block diagram of the vehicle according to another embodiment;
FIG. 6 is a control block diagram of a traction motor of a vehicle operating in a regenerative braking mode according to an embodiment;
FIG. 7 is a control block diagram of the traction motor of a vehicle operating in the regenerative braking mode according to another embodiment;
FIG. 8 is a control block diagram of a power take-off motor of the vehicle operating in a regenerative braking mode according to an embodiment;
FIG. 9 is a control block diagram of the power take-off motor of the vehicle operating in the regenerative braking mode according to another embodiment;
FIG. 10 is a control block diagram of the power take-off motor of the vehicle operating in the regenerative braking mode according to another embodiment;
FIG. 11 is a flow chart of a method for controlling the vehicle according to an embodiment;
FIG. 12 is a flow chart of the method for controlling the vehicle according to another embodiment;
FIG. 13 is a flow chart of the method for controlling the vehicle according to another embodiment; and
FIG. 14 is a flow chart of the method for controlling the vehicle according to another embodiment.

### DETAILED DESCRIPTION

Firstly, embodiments of the disclosure relate generally to a vehicle or an improved drive system of a car, or more specifically to a drive system with improved electric braking characteristics used in a vehicle or a car. Specially, in some embodiments, the invention propose a new "electric braking control method" or a new "electric braking power recover distribution method", which may distribute the energy generated by a motor operating in a regenerative braking mode in accordance with some components' operating mode of a vehicle during operations. For instance, the target braking power may be distributed according to the charging statuses. In some occasions, when the energy source has a low power, whole or part of the power generated by regenerative braking is charged into the energy source. In some other occasions, such as a case of the energy source in a full charge, the target braking power is at least partially distributed into target loss power, which may be the electric drive system generating loss power of a vehicle or a car. For example, in an embodiment, the target loss power may be the loss power of a motor, in a specific embodiment, it may generate a desirable motor control volume based on the target motor loss power, such as a reference current magnitude, furthermore, it also generates a desirable motor current phase delay through a motor torque control circuit, so as to at least operate the motor control based on the reference current magnitude and current phase delay, to control the motor to dissipate partially the target braking power on the motor. In other embodiments, the target loss power may generate loss power through the electric drive system's convertor or the controller.

In some more specific embodiments, this proposed electric braking control method may be operated with a traction motor (TM), namely, when the vehicle or car receive a TM braking command, it may at least partially distribute the TM's target braking power to TM loss power, according to the energy source's charge status.

In some more specific embodiments, this proposed electric braking control method may be operated with a power take-off (PTO) motor, namely, when the vehicle or car receive a PTO motor braking command, at least part of target braking power of the TM may be distributed to the PTO motor loss power, according to the charge status of the PTO motor.

Operating the improved electric braking control method of this invention may obtain varieties of technical effects or technical advantages, one of which is that, the energy generated by the motor in a braking mode can be regenerated maximally to an energy source or an energy storage device of the vehicle so that the vehicle can run longer. Another technical effect or technical advantage is that the vehicle's drive capability is improved through controlling the motor according to the charge status of the energy source to dissipate the motor braking generating energy. A further technical effect or technical advantage is that it may avoid or reduce the use of mechanical braking devices so as to improve the service life of the mechanical braking devices. A further technical effect or technical advantage is that current dump resistors can be omitted to lower the cost. To the those of ordinary skill in the art to which this disclosure belongs, these and other features and aspects of the present invention will become better understood when the following detailed description is read with reference to the accompanying drawings in which like characters represent like parts throughout the drawings.

One or more specific embodiments of this invention may be illustrated in the below. It is firstly that, in these embodiments' specific description, for brief description, the specification couldn't describe in detail the all characters of actual embodiments. It's understandable that, in actual operations of any embodiment, just like the process in any engineering project or designing project, to achieve developer's specific target, or to meet the system relative or commerce relative limitations, various kinds of specific decisions be usually determined, yet which may change from one embodiment to another. Besides, it's also understandable that, although the efforts of development may be complicated and tedious, to one of ordinary skill of the art which this disclosure is relative to, some changes like design, manufacture or production on the basis of the technical content in this disclosure are conventional technical means, which shouldn't be understood that the disclosure content is insufficient.

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. "A" or "an" and the like herein do not denote any quantity limit, but only means having at least one. "Or" comprises any one or all of the listed objects. The use of "including," "comprising", "having" or "contain" and variations thereof herein are meant to encompass the items listed thereafter and equivalents thereof as well as additional items. Although the terms "connected" and "coupled" are often used to describe physical or mechanical connections or couplings, they are not intended to be so restricted and can include electrical connections or couplings, whether direct or indirect. Furthermore, the mentioned "controller" or "control system" may comprise a single component or a combination of a plurality of active components or negative components connected directly or indirectly, such as one or more integrated circuit chips, to supply corresponding detailed functions.

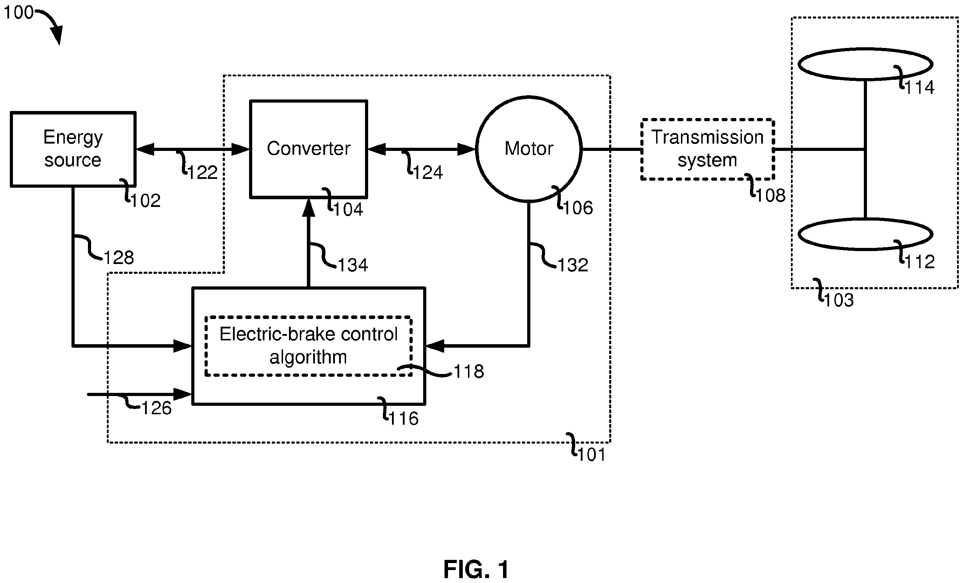

FIG. 1 illustrates a schematic block diagram of a vehicle 100 according to an embodiment. Herein the "vehicle" refers to all suitable kinds of machines designed to transport people and/or cargo from one place to another, and/or machines operating one or more auxiliary functions. In one embodiment, the vehicle may be a ground vehicle which moves relative to the road surface, for example, bicycle, motorcycle, car, sedan, truck, van, bus, tractor, electric bus, electric omnibus, tractor, forklift, excavator, crane, garbage truck, trailer, motorcycle, train, subway, etc. The vehicle may also be a vehicle on or in water, e.g., boat, vessel, ship, bow, tanker, etc.

In FIG. 1, a vehicle 100 includes an electric drive system 101 coupled between an energy source 102 and a load system 103. The electric drive system 101 is configured to operate unidirectional or bidirectional energy change operations and control operations. More specifically, in an embodiment, the vehicle 100 may work in a drive mode, and the electric drive system 101 is configured to receive an input power supplied by the energy source 102, convert the input power to a mechanical drive energy or mechanical torque meeting the needs of the load system 103, and supply the mechanical drive energy or mechanical torque to the load system 103 to drive the load system 103. In an embodiment, the vehicle 100 may also work in an energy regenerative or braking mode. Specifically, the electric drive system 101 is further configured to convert the mechanical braking power or mechanical torque from the load system 103 to power in other forms. In an embodiment, the other forms of power may be used to charge the energy source 102, for example, charging a chargeable battery. In other embodiments, the other forms of power may also be used for other purposes, for example, supplying power to a heating device or an air-condition device of the vehicle 100.

In some embodiments, the input power supplied to the electric drive system 101 by the energy source 102 may be direct-current power, alternating current power, or a suitable combination of them. For example, in some embodiments, the energy source 102 may be a battery or a battery pack, but non-limited. The battery or the battery pack mentioned herein may include a lead-acid battery, a nickel cadmium battery, a nickel metal hydride battery, a lithium ion battery, a lithium polymer battery, etc. In other embodiments, the battery or the battery pack includes, for example, hydrogen fuel, bio fuel, gas, fuel cell, flywheel batteries, super capacitors, or combinations of the above, and various other suitable energy supply mechanisms being capable of powering the electric drive system 102.

In some embodiments, the energy source 102 may be an onboard device, which may be integrated with the vehicle 100. In other embodiments, the energy source 102 may be located outside the vehicle 100. For example, the vehicle 100 may supply an onboard energy access (not shown) electrically coupled to a power grid or other power equipment. The onboard energy access is configured to convert the power received from the power grid or other power equipment to power with suitable form (e.g. DC power), and supply the converted power to the electric drive system 101. The onboard energy access may also be configured to charge the energy source 102, when the storage energy of the energy source 102 is at least partially exhausted. In some embodiments, the energy source 102 may be a combination of the onboard energy source and the onboard energy access, also namely, it may supply power to the electric drive system 101 through the onboard energy source, also supply power to the electric drive system 101 through the onboard energy access, or through their combination.

In the illustrated embodiment, the electric power supplied by the energy source 102 is DC power, which is transported to the electric drive system 101 through a circuit connected between the energy source 102 and the electric drive system 101. In some embodiments, a DC-link (not shown) connects the energy source 102 and the electric drive system 101, and the DC-link may include one or more capacitors in series and/or in parallel, and is configured to filter the DC power supplied by the energy source 102 and supply the DC power with a certain voltage to the electric drive system 101.

Further referring to FIG. 1, in an embodiment, the electric drive system 101 comprises a convertor 104, a motor 106 and a controller 108. In the illustrated embodiment, the motor 106 is located inside the electric drive system 101. In other embodiments, the motor 106 may be arranged outside the electric drive system 101. Furthermore, in some embodiments, the electric drive system 101 may include other elements, like the DC-link mentioned above.

In an embodiment, the convertor 104 is configured to operate bidirectional energy change operations. More specifically, when the vehicle 100 operates in a first working mode, such as a drive mode, the convertor 104 is configured to convert a first power 122 from the energy source 102 (e.g. DC power) to a second power 124 (e.g. AC power) supplied to a motor 106. In other embodiments, the convertor 104 may be configured to receive the DC power converted by the DC-DC converter arranged between the energy source 102 and the converter 104. The motor 106 supplies a mechanical power or mechanical torque to the load system 103 in the effect of the second power 124. In a specific embodiment, the motor 106 may be a three-phase AC motor, or more specifically a brushless DC motor. In other embodiments, the motor 106 may be any other types of motors, like a permanent magnet synchronous motor, etc. In the illustrated embodiment, the motor 106 and the load system 103 are coupled through a transmission system 108 (e.g. gear case) which could adjust the mechanical output torque or velocity of the motor 106. In some other embodiments, the transmission system 108 may be excluded. In this illustrated embodiment, the load system 103 includes a first drive wheel 112 and a second drive wheel 114 operating in the effect of the mechanical energy or mechanical torque supplied by the motor 106 or the transmission system 108, to drive the vehicle 100 to take specific actions (e.g. forward, backward, turn, etc.). In other embodiments, the load system 103 may include one or more than two drive wheels, and in some other embodiments, the load system 103 may also include other types of load devices.

Sequentially shown as FIG. 1, in an embodiment, when the vehicle 100 operates in a second working mode, such as a regenerative braking mode, the convertor 104 is also configured to convert the first power 124 (e.g. three-phase AC power) from the motor 106 to a second power 122 (e.g. DC power). The first power 124 is acquired through converting the mechanical energy or mechanical torque of the motor 106, the second power 122 is provided to the energy source 102, e.g. a chargeable battery or a super capacitor to be charged, so as to regenerate a portion of energy for the following drive mode operations. Obviously, as above described, the second power 122 may be configured to power other devices inside the vehicle 100 (e.g. powering a heating device or an air-conditioning device, etc.), and/or power the other devices outside the vehicle 100, (e.g. a power network).

The convertor 104 mentioned herein may be any suitable type of convertors, such as an inverter with full-bridge topology structure, etc. The convertor 104 may include multiple switch devices which are turned on and/or off in the effect of the control signal 134 of the controller 116 to convert electric. The switch devices mentioned herein may be suitable varieties of switch devices based on semiconductors including but not limited to, bipolar transistor, metal oxide field effect transistor, turn off thyristor, insulated gate bipolar transistor, gate converter thyristor and devices based on silicon carbide, etc.

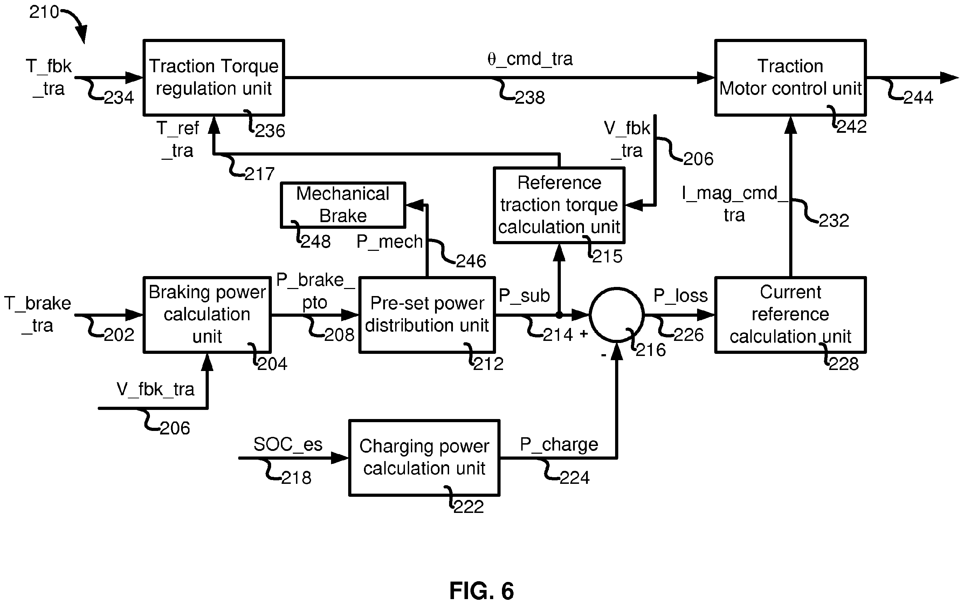

Sequentially shown as FIG. 1, in an embodiment, the controller 116 is configured receive at least one first parameter signal 128 relative to the energy source 102, and at least one second parameter signal 132 relative to the motor 106. In an embodiment, the first parameter signal 128 may denote the state-of-charge of the energy source 102, and may be measured by one or more sensors (not shown). In other embodiments, the first parameter signal 128 reflecting the state-of-charge of this energy source 102 may be supplied by the energy management system (EMS) relative to the energy source 102. In an embodiment, the second parameter signal 132 may be a torque and/or velocity and so on, which may also be measured by one or more sensors (not shown). Besides, the controller 116 is configured to receive one or more command signals 126, such as a braking command. Specially, the controller 116 is configured, at least based on the first parameter signal 128, the second parameter signal 132 and the command signal 126, to operate the proposed new electric-brake control algorithm 118 and send the control signal 134 to the convertor 104 to distribute the energy generated by the motor 106 in the regenerative braking mode. More specifically, operating the electric-brake control algorithm 118 based on various input command signals and the first, second parameter signals 128, 132, etc. may result in different distributions of the regenerative braking power. For instance, in a condition, when the first input command 126 instructs the motor 106 to generate a relative smaller first braking power and the energy source 102 has lower power or can receive much charge power, the regenerative braking power from the energy source 102 is regenerated back to the energy source 102. In another condition, when the first input command 126 instructs the motor 106 to generate a second braking power which is bigger than the first braking power and the state of charge of the energy source 102 indicates the energy source 102 cannot receive all the regenerative braking power generated by the motor 102, the convertor 104 is controlled to output parameters of the power 124 to the motor 106, such as adjusting the current magnitude and postponing current phase, to make the motor 106 to generate self-controllably some energy, thus achieving desirable braking effect. That is to say, a portion of loss power acquired by the regenerative braking is dissipated through controlling the motor 106, to make the state of charge of the energy source 102 has no impact on the braking torque or braking force, thus offering the person controlling the vehicle a better drive capability. The detailed embodiments about the electric-brake control algorithm 118 will be described with FIGS. 6-12 below.

In other embodiments, the controller 116 may also receive parameters of other devices, e.g., receive parameters relative to the convertor 104 and operate the electric-brake control algorithm 118 based on the received parameters to distribute reasonably the power generated by the motor 106 in braking. More specifically, in an alternative embodiment, the controller 116 may receive various parameters for the convertor 104 including current, voltage, and/or temperature parameters to make the power generated by the motor 106 in braking to be dissipated in the convertor 104 in some embodiments. More specifically speaking, when the state of charge of the energy source 102 indicates the energy source 102 does not have enough capacity to receive all the regenerative braking power generated by the motor 102, the convertor 104 is controlled, for instance, a part of switch devices of the convertor 104 is controlled to generate controllable conductive dump, to dissipate a portion of the braking power. In some other embodiments, part of the braking power generated by the motor 106 is dissipated in the controller 116 through the controller 116 itself.

The controller 116 mentioned herein may include varieties of programmable circuits or devices including Digital Signal Processor (DSP), Field Programmable Gate Array (FPGA), Programmable Logic Controller (PLC) and Application Specific Integrated Circuit (ASIC). The electric-brake control algorithm 118 herein may be operated through software, hardware, or a combination thereof.

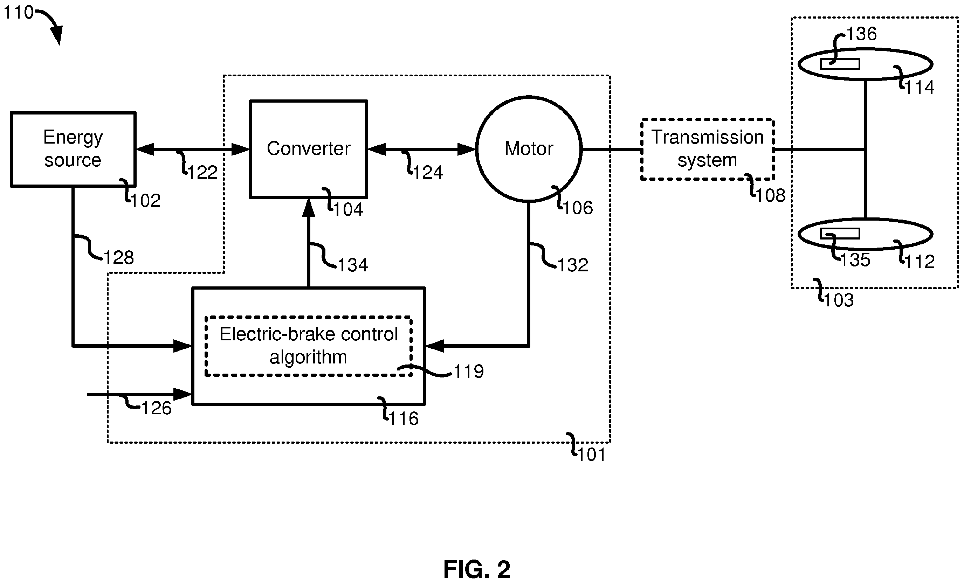

FIG. 2 illustrates a schematic block diagram of a vehicle 110 according to another embodiment. The vehicle 110 shown in FIG. 2 is substantially similar to the vehicle 100 in FIG .1, such as, the vehicle 110 also includes an energy source 102 and an electric drive system 101, and the electric drive system 101 also includes a convertor 104, a motor 106, and the controller 116. Therefore, the devices symbolized in the same symbols shown in the embodiments of FIG. 2 will not be described detailed. Specifically, in the embodiment of FIG. 2, the vehicle 110 may also include one or more mechanical braking devices, for example, the first braking device 134 and the second braking device 136. The first mechanical barking device 134 is coupled to the first drive wheel 112 through various current structures, so as to supply braking force to the mechanical energy of the second drive wheel 114, to decelerate or stop operating.

Sequentially shown in FIG. 2, the controller 116 is configured, at least based on a first command 126, first and second parameter signals 128, 132, to operate the electric-brake control algorithm 119 to distribute the braking power generated by the motor 106 in the regenerative braking mode. More specifically speaking, operating the electric-brake control algorithm 119 according to various input commands 126 and the first, second parameter signals 128, 132, etc. may result in different distribution of the regenerative braking power. For instance, in a condition, when the first input command 126 instructs the motor 106 to generate a relative smaller first braking power and the energy source 102 has lower power or can receive much charge power, the regenerative braking power from the energy source 102 is regenerated back to the energy source 102. In another condition, when the first input command 126 instructs the motor 106 to generate a second braking power which is bigger than the first braking power and the state of charge of the energy source 102 indicates the energy source 102 do not have capacity to receive all the regenerative braking power generated by the motor 102, the convertor 104 is controlled to output parameters of the power 124 to the motor 106, such as adjusting the current magnitude and postponing current phase, to make the motor 106 to generate self-controllably some energy, thus achieving desirable braking effect. That is to say, a portion of loss power acquired by the regenerative braking is dissipated through controlling the motor 106, to make the state of charge of the energy source 102 has no impact on the braking torque or braking force, thus offering the person controlling the vehicle a better drive capability. In another case, when the first input command 126 instructs the motor 106 to generate a third braking power which is bigger than the second braking power and the state of charge of this energy source 102 indicates the energy source 102 do not have capacity to receive all the regenerative braking power generated by the motor 102, part of the regenerative braking power from the motor 106 may be controlled to be dissipated in the first and/or second mechanical braking devices 134, 136, and part of the rest regenerative braking power is configure to charge the energy source 102, yet remain regenerative braking power is dissipated in the motor 106.

Similarly, when the controller 116 is operating electric-brake control algorithm 119, at least a portion of the braking power is dissipated in the convertor 104 and/or the controller 116.

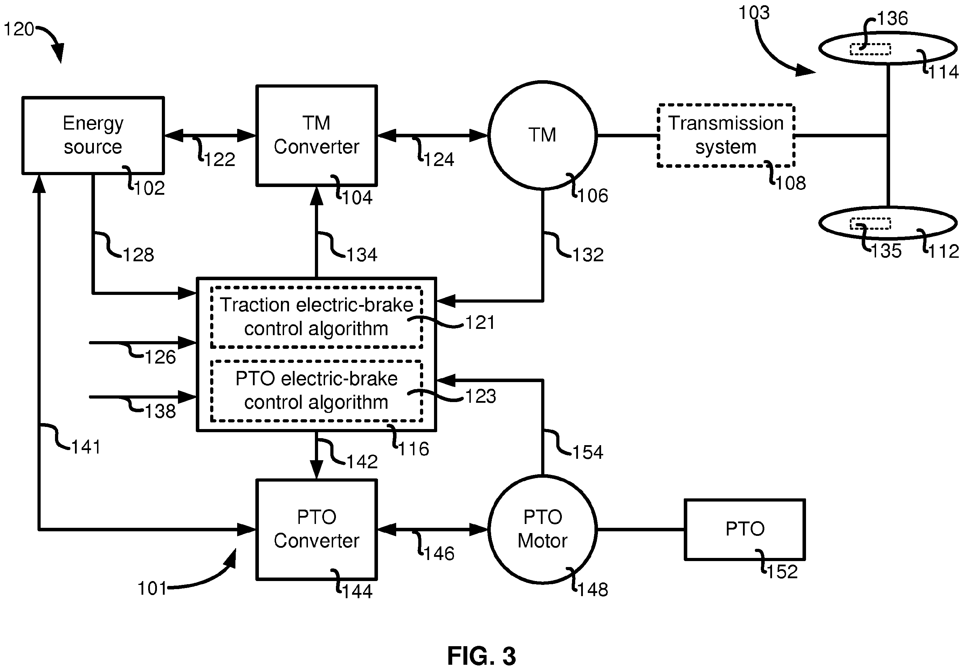

FIG. 3 is a schematic block diagram of a vehicle 120 according to another embodiment. The vehicle 120 includes an energy source 102, a load system 103 and an electric drive system 101 coupled therebetween. In a specific embodiment, the vehicle 120 may be implemented in an E-tractor or an E-forklift or other various suitable devices not only running but also operating miscellaneous functions. Similarly, the electric drive system 101 is also configured to have an improved regenerative braking power distribution mechanism to distribute reasonably the braking power of the motor in the regenerative braking mode according to various parameter signals (e.g. the state of charge of the energy source 102) and/or command signals (e.g. target braking torques, etc.), etc.

In the embodiment shown in FIG. 3, the electric drive system 101 includes a TM converter 104, a TM 106, a PTO convertor and a controller 116. In an embodiment, one or both of the TM convertor 104 and the PTO convertor 144 are configured to operate bidirectional energy exchange operations.

More specifically, when the vehicle 100 operates in a first working mode, such as a drive mode, the TM convertor 104 may be configured to convert the first power 122 from the energy source 102 (e.g. DC power) to a second power 124 (e.g. AC power) supplied to a TM 106. In other embodiments, the convertor 104 may be configured to receive the DC power converted by the DC-DC converter arranged between the energy source 102 and the TM converter 104. The TM 106 supplies a mechanical power or mechanical torque to a load system 103 in the effect of the second power 124. In a specific embodiment, the TM 106 may be a three-phase AC motor, or more specifically a brushless DC motor. In other embodiments, the TM 106 may be any other type of motors, like a permanent magnet synchronous motor, etc. In this illustrated embodiment, the motor 106 and the load system 103 are coupled through a drive system 108 (e.g. gear case), which could adjust the mechanical output torque or velocity of a motor 106. In some other embodiments, the drive system 108 may be excluded. In the illustrated embodiment, the load system 103 includes the first load, such as, a first drive wheel 112 and a second drive wheel 114, operating in the effect of the mechanical energy or mechanical torque supplied by the motor 106 or the vehicle 108, to drive the vehicle 100 to take specific actions like forward and backward etc. In other embodiments, the load system 103 may include one or more than two drive wheels.

In an embodiment, when operating in the first working mode or the drive mode, the PTO convertor 144 and the PTO motor 148 may not work temporarily to stop supplying output mechanical energy or mechanical torque to the PTO device 152. For instance, the electric tractor returns home from a farm after finishing ploughing the farmland. In another embodiment, the PTO convertor 144 and the PTO motor 148 may work at the same time with the TM convertor 104 and the TM 106, like the E-tractor ploughing the farmland rotationally while traveling. In the first working mode, when the PTO motor 148 supplies take-off power, the PTO convertor 144 is configured to convert the first electric power 141 (e.g. DC power) of the energy source 102 to a second power 146 (e.g. AC power), and supply the second power 146 to the PTO motor 148. In other embodiments, the PTO convertor 144 may be also configured to receive the DC power converted by the DC-DC converter arranged between the energy source 102 and the converter 104. In other embodiments, the PTO convertor 144 and the traction convertor 104 may be configured to receive the input power from the respectively set energy sources, i.e., the traction convertor 104 receives the power from the first power source, and the PTO convertor 144 receives the power from the second power source. The PTO motor 148 in effect of the second power 146 supplies mechanical energy or mechanical torque to the PTO device 152 in the load 103. The operating functions of the PTO devices 152, includes but is limited to, dressing plants, ploughing the land, listing materials, shoveling material, excavating materials and pouring materials, etc. In a specific embodiment, the PTO motor 148 may be a three-phase AC motor, or more specifically a brushless DC motor. In other embodiments, the PTO motor 106 may also be other types of motors, like a permanent magnet synchronous motor. In this schematic embodiment, the PTO motor 148 is coupled directly to the PTO device 152, in other embodiments, the PTO motor 148 and the PTO device 152 are coupled through a drive system 108 (e.g. gear case), which could adjust the mechanical output torque or velocity of a power taker-off motor 148.

Sequentially shown as FIG. 3, in an embodiment, when the vehicle 100 operates in a second working mode, such as a regenerative braking mode, the PTO convertor 144 nay also be configured to convert the first power 146 (e.g. three-phase AC power) from the PTO motor 106 to a second power 141 (e.g. DC power), wherein the first power 146 is acquired through converting the mechanical energy or mechanical torque of the PTO motor 148, and the first power 146 is provided to the energy source 102, e.g. a chargeable battery or a super capacitor, etc. to charge it, so as to regenerate some energy for the following drive mode operations or supplying other assistance PTO. Obviously, as above described, the second power 122 may be configured to power other devices inside the vehicle 100 (e.g. powering a heating device or an air-conditioning device, etc.), and/or power the other devices outside the vehicle 100, e.g. a power network, etc.

In an embodiment, when the vehicle 120 operates in a second working mode, such as a regenerative braking mode, the convertor 104 nay also be configured to convert the first power 124 (e.g. three-phase AC power) from the motor 106 to a second power 122(e.g. DC power), wherein, the second power 141 is provided to the energy source 102, e.g. a chargeable battery or a super capacitor, etc. to charge it, thus to regenerate a portion of energy to be used in the following drive mode operations, or to supply other assistance PTO. Obviously, as above described, the second power 141 may be configured to power other devices inside the vehicle 100(e.g. powering a heating device or an air-conditioning device, etc.), and/or power the other devices outside the vehicle 100, e.g. a power network.

Sequentially shown as FIG. 3, in an embodiment, the controller 116 is configured receive at least one first parameter signal 128 relative to the energy source 102, at least one second parameter signal 132 relative to the TM 106, and at least one third parameter signal 154 relative to the PTO motor 148. In an embodiment, the first parameter signal 128 may denote the state-of-charge of the energy source 102, and may be measured with one or more sensors (not shown). In other embodiments, the first parameter signal 128 reflecting the state-of-charge of this energy source 102 may be supplied by the energy management system (EMS) relative to the energy source 102. In an embodiment, the second parameter signal 132 may be a torque and/or velocity and so on, which may also be measured by one or more sensors (not shown). Besides, the controller 116 is still configured to receive at least the first command signal 126 and the second command signal 138. Specially, the first command signal 126 may be a TM braking command, and the second command signal 138 may be a PTO motor braking command.

In an embodiment, the controller 116 is configured, at least based on a first command 126, first and second parameter signals 128, 132, to operate the traction electric-brake control algorithm 121 and send control signals 134 to the TM (TM) converter 104 to distribute the braking power generated by the motor 106 in the regenerative braking mode. More specifically speaking, operating the traction electric-brake control algorithm 121 according to various input commands 126 and the first, second parameter signals 128, 132, etc. may result in different distribution of the regenerative braking power. For instance, in a condition, when the first input command 126 instructs the TM 106 to generate a relative smaller first braking power and the energy source 102 has lower power or can receive much charge power, the regenerative braking power from the energy source 102 is regenerated back to the energy source 102. In another condition, when the first input command 126 instructs the TM 106 to generate a second braking power which is bigger than the first braking power and the state of charge of the energy source 102 indicates the energy source 102 do not have capacity to receive all the regenerative braking power generated by the motor 102, the convertor 104 is controlled to output parameters of the power 124 to the TM 106, such as adjusting the current magnitude and postponing current phase, to make the TM 106 to generate self-controllably some energy, thus achieving desirable braking effect. That is to say, a portion of loss power acquired by the regenerative braking is dissipated through controlling the TM 106, to make the state of charge of the energy source 102 has no impact on the braking torque or braking force, thus offering the person controlling the vehicle a better drive capability.

In an embodiment, the controller 116 is configured, at least based on the first parameter signal 128, the third parameter signal 154, and the second command signal 138, etc., to operate the PTO electric-brake control algorithm 123, and to send a control signal 142 to the PTO convertor 144, thus to distribute the braking power generated by the PTO motor 148 in the regenerative braking mode. More specifically speaking, operating the PTO electric-brake control algorithm 123 according to various second input commands 126 and the first, third parameter signals 128, 154, etc. may result in different distributions of the regenerative braking power. For instance, in a case, when the second input command 138 instructs the PTO motor 148 to generate relative smaller first braking power and the energy source 102 is in low power or may receive much charge power, all the regenerative braking power from the PTO motor 148 may be regenerated back to the energy source 102. In another case, when the second input command 138 instructs the PTO motor 148 to generate a second braking power which is bigger than the first braking power and the state of charge of this energy source 102 indicates the energy source 102 does not have capacity to receive all the regenerative braking power from the PTO motor 148, the convertor 104 is controlled to output parameters of the power 146 to the PTO motor 148, such as adjusting the current magnitude or postponing current phase, etc., to make the PTO motor 148 to generate self-controllably some energy, thus achieving desirable braking effect.

Similarly, when the controller 116 is operating the TM electric-brake control algorithm 121 and the PTO electric-brake control algorithm 123, at least part of the braking energy from the TM 106 and the PTO motor 148 is dissipated in the traction convertor 104, the PTO convertor 144 and/or the controller 116.

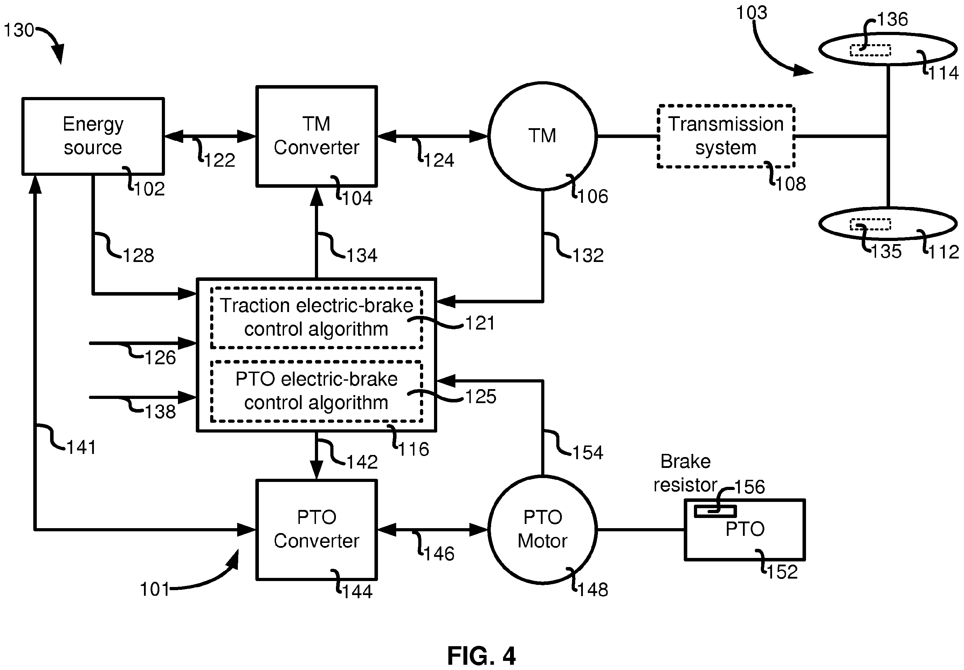

FIG. 4 is a schematic block diagram of the vehicle 130 according to another embodiment. The vehicle 130 shown in FIG. 3 is substantially similar to the vehicle 120 in FIG .3, such as, the vehicle 130 also includes an energy source 102 and an electric drive system 101, and the electric drive system 101 also includes a traction convertor 104, a TM 106, PTO convertor 144, PTO motor 148 and the controller 116. Therefore, the devices symbolized in the same symbols shown in the embodiments of FIG. 4 will not be described detailed. Specifically, in the embodiment of FIG. 4, the vehicle 130 also includes one or more dump resistors or brake resistors 156. The dump resistor 156 is coupled to the PTO device 152 through various known structures, to dissipate the PTO motor 148 braking generating energy, so as to decelerate or stop operating.

In an embodiment, the controller 116 is configured, at least based on the first parameter signal 128, the third parameter signal 154, and the second command signal 138, etc. to operate the PTO motor electric-brake control algorithm 125, and to send a control signal 142 to this PTO convertor 144, thus to distribute reasonably the braking power generated by the PTO motor 148 in a regenerative braking mode. In another case, when the second input command 138 instructs the PTO motor 148 to generate a third braking power (larger than the mentioned second braking power in conjunction with FIG. 3), and the state of charge of the energy source 102 indicates the energy source 102 does not have capacity to receive all the regenerative braking power of the PTO motor 148, a part of the regenerative braking power from the PTO motor 148 is controlled to dump in a dump resistor or a braking resistor 156, a portion of the rest regenerative braking power is used to charge the energy source 102, yet remain portion is dissipated in the PTO motor 148.

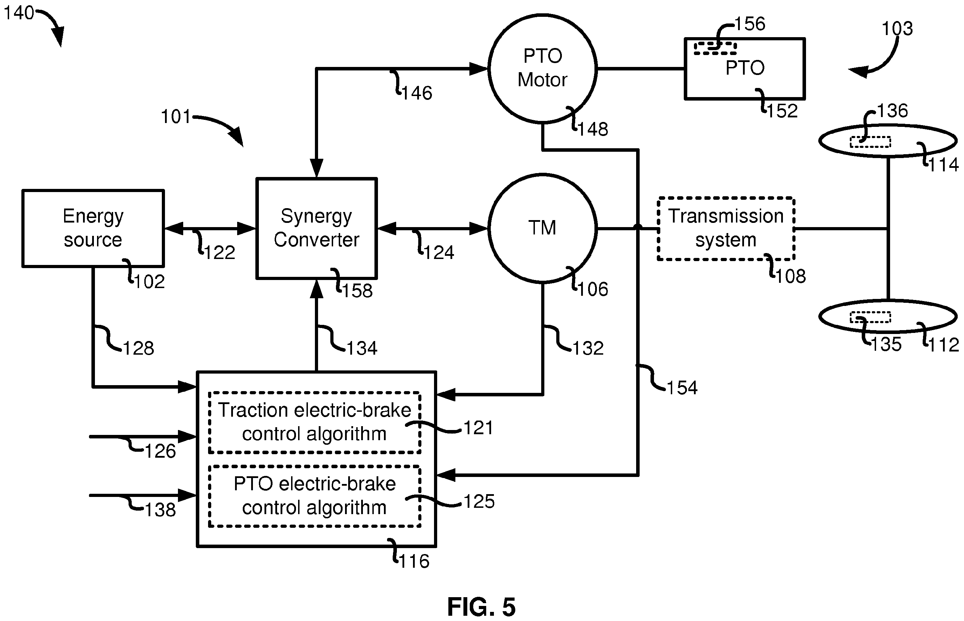

FIG. 5 is a schematic block diagram of the vehicle 140 according to another embodiment. The vehicle 140 shown in FIG. 5 is substantially similar to the vehicles 120 and 130 in FIG .3 and FIG. 4, such as, the vehicle 140 also includes an energy source 102 and an electric drive system 101, and the electric drive system 101 also includes a traction convertor 106, a PTO motor 148, and the controller 116. Therefore, the devices symbolized in the same symbols shown in the embodiments of FIG. 5 will not be described detailed. In the embodiment of FIG. 5, the electric drive system 101 also includes an integrated convertor 156, electrically coupled to an energy source 102, a TM 106 and a PTO motor 148, and it may operate bidirectional energy convert operations in effect of the control signals 134 from the controller 116, i.e., the first power 122 of the energy source 102 is converted to a second power 124 for the TM 106 and a third power 146 for PTO motor 148. In a regenerative braking mode, the second power 124 from the TM 106 and the third power 146 from the PTO motor 148 are converted to a first power 122 to charge the energy source 102.

Specific details about the integrated convertor 156 may refer to a China patent application transferred to the joint applicators with the application date of March 15, 2013 and the application number of CN20130084090.2, the full text of which is referred herein as reference.

In the embodiment shown in FIG. 5, the controller 116 is configured, at least based on the first parameter signal 128, the second parameter signal 132 and the first command signal 126, to operate the electric-brake control algorithm 121, and to send a control signal 134 to the integrated convertor 156, thus to distribute the braking power generated by the TM 106 in the regenerative braking mode. More specifically speaking, operating the electric-brake control algorithm 121 according to various input commands 126 and the first, second parameter signals 128, 132, etc. may result in different distributions of the regenerative braking power. Specially, in some cases, when the PTO motor 148 works normally to control the PTO device 152 to operate some tasks, the controller 116 sends the control signals 134 to the integrated convertor 156 to adjust parameters of the second power 124 and the third power 146, such as the current magnitude and current phase delay, thus a portion of the energy generated by the TM 106 in braking is dissipated in the TM 106, yet the other portion of the energy is dissipated in the PTO motor 148. In some other embodiments, a portion of the energy generated by the TM 106 in braking is dissipated in the mechanical braking devices 135 and 136.

In the embodiment shown in FIG. 5, the controller 116 is configured, at least based on the first parameter signal 128, the second parameter signal 132 and the first command signal 128, to operate the PTO electric-brake control algorithm 121, and to send the control signal 134 to this integrated convertor 156, thus to distribute the braking power generated by the PTO motor 106 in a regenerative braking mode. More specifically speaking, operating the electric-brake control algorithm 125 according to various input commands 138 and the first, second parameter signals 128, 132, etc. may result in different distributions of the regenerative braking power. Specially, in some cases, when the TM 148 works normally to output mechanical torques to the loads 112 and 114 and the energy source 102 could not receive all energy from the PTO motor 148 in braking, the controller 116 may send the control signals 134 to the integrated convertor 156 to adjust the parameters of the second power 124 and the third power 146, such as the current magnitude and current phase delay, thus a portion of the energy generated by the PTO motor 148 in braking is dissipated in the TM 106, yet the other portion is dissipated in the PTO motor 148. In some other embodiments, a portion of the energy generated by the PTO motor 148 in braking is dissipated in the dump resistor 156.

FIG. 6 is a control block diagram of the traction electric-brake control algorithm 210 distributing energy of the TM of a vehicle in a regenerative braking mode according to an embodiment. The traction electric-brake control algorithm 210 may be operated through software, or through hardware, or through a combination of software and hardware.

Shown in FIG. 6, the traction electric-brake control algorithm 210 includes a TM braking power calculation unit 204, a pre-set power distribution unit 212, a charging energy calculation unit 222, a TM target dump calculation unit 216, a current reference calculation unit 228, a TM control unit 242 and a traction torque regulation unit 236.

The TM braking power calculation unit 204 is configured to receive the TM target braking torque signals 202 and the TM feedback velocity 206, and to calculate the TM target braking power 208 of the TM based on the below formula: E=T×V, where E is the TM target braking power, T is the TM target braking torque, and V is the TM actual velocity.

The pre-set power distribution unit 212 receives the TM target braking power 208 calculated by the TM braking power calculation unit 204, and distributes the TM target braking power 208 in accordance with pre-set rules. In an embodiment, the pre-set power distribution unit 212 is configured to preferentially regenerate the TM target braking power 208 back to the energy source 102, also i.e., when the energy source 102 can receive all the TM target braking power 208, the pre-set power distribution unit 212 may set a target mechanical braking power 246 distributed to the mechanical braking device 248 as zero, and send all of a sub target braking power 214 generated in the distribution back to the energy source 102. In an embodiment, when the state of charge of the energy source 102 demonstrates the energy source 102 do not have enough capacity to receive all the target braking power 208, the pre-set power distribution unit 212 regenerates the target braking power 208 to the energy source 102 as much as possible, and then dissipates rest of the TM target braking power 208 in the TM 106 and the mechanical braking device 248. In some embodiments, if the rest power after the TM target braking power 208 is regenerated to the energy source 102 is smaller than the maximum dumping power generated by the TM 106, also i.e., when the TM 106 is able to bear the rest energy after the TM target braking power 208 charging the energy source 102, the pre-set power distribution unit 212 may set the target mechanical braking power 246 distributed to the mechanical braking device 248 as zero.

The TM target dump calculation unit 216 is configured to obtain the TM target loss power 226 through a subtraction between the sub target braking power 214 from the pre-set power distribution unit 212 and the energy source target charging power (or energy source chargeable power) 224. In an embodiment, the energy source target charging power (or energy source chargeable power) 224 is calculated by the charging energy calculation unit 222 according to the signal 218 denoting the state of charge of the energy source 102. The TM target loss power 226 is employed by the reference current calculation unit 228 to calculate a reference current magnitude signal 232. The reference current magnitude signal 232 indicates the desirable magnitude value of the current from the TM convertor 104 to the TM 106. The reference current magnitude signal 232 is provided to the TM control unit 242. In an embodiment, the TM control unit 242 generates a control signal 244 at least based on the reference current magnitude 232 and the current phase delay command 238 from the traction torque regulation unit 236 to control the TM convertor 104 to change or adjust the parameters of the power output from the TM convertor 104 to the TM 106, thus the regenerative braking power of the TM 106 is distributed reasonably.

In the embodiment shown in FIG. 6, the current phase delay command 238 may be generated by the traction torque regulation unit 236 according to the TM feedback torque signal 234 and the reference braking torque signal 217. In the embodiment of

FIG. 6, the TM electric-brake control algorithm 210 still includes a reference traction torque calculation unit 215. The reference traction torque calculation unit 215 may divide the sub-target braking power 214 and the TM feedback velocity 206 to acquire a reference braking torque signal 217.

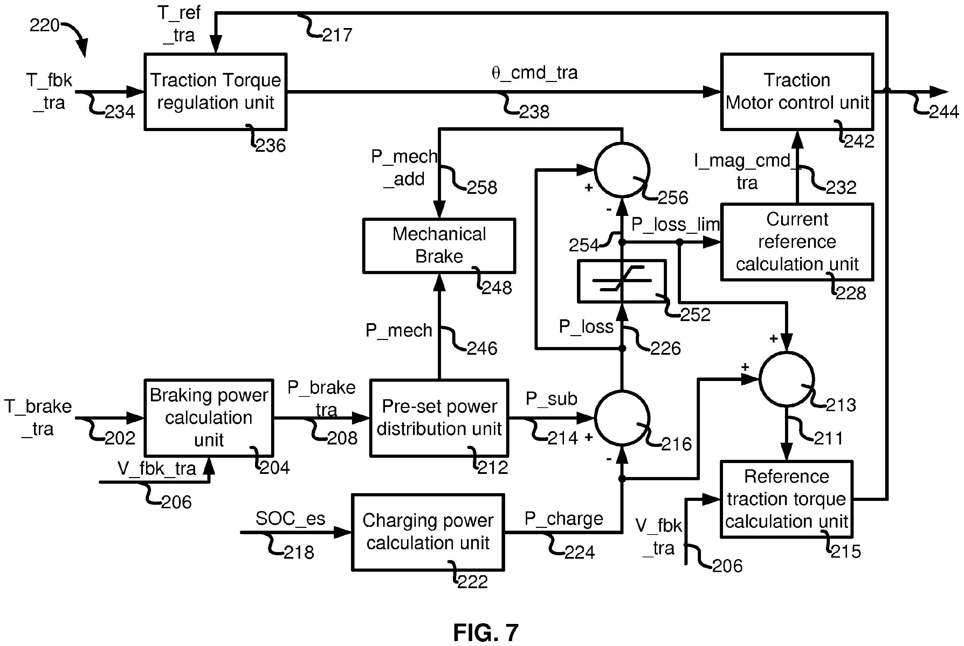

FIG. 7 is a control block diagram of the traction electric-brake control algorithm 210 distributing energy of the TM of a vehicle in a regenerative braking mode according to another embodiment. The TM electric-brake algorithm 220 shown in FIG. 7 has a basic structure similar to the TM electric-brake algorithm 210 shown in FIG. 6, thus, the components or modules symbolized in a same component symbol are not described in detail herein.

In the embodiment of FIG. 7, the TM electric-brake algorithm 220 still includes a magnitude limit device 252 and a summation device 256. The magnitude limit device 252 is coupled between the TM target dump calculation unit 216 and the reference current calculation unit 228. The magnitude limit unit 252 is configured to limit the target loss power 226 based on the maximum and the minimum motor loss value relative to the TM 106, and to supply a limited target loss power value 254 to the reference current calculation unit 228. In an embodiment, the summation unit 256 is configured to do a subtraction between the non-limited target loss power 226 and limited target loss power 254 to acquire an power deviation signal or an extra target loss power 258. When the power deviation signal 258 is positive, it means that the target loss power 226 is larger than the maximum loss power generated by the TM 106, therefore, in an embodiment, the power deviation signal 258 is configured to control the mechanical braking device 248 to generate a braking force so that the extra target loss power is dissipated by the mechanical braking device 248.

Furthermore, in the embodiment shown in FIG. 7, the TM electric-brake algorithm 220 also includes a summation unit 213 and a reference traction torque calculation unit 215. The summation unit 213 adds the energy source target charge energy (or energy source chargeable energy) 224 from the charging power calculation unit 222 and the limited target loss power 254, so as to get a hybrid energy value 211. The reference traction torque calculation unit 215 is configured to divide the hybrid power value 211 with the TM feedback velocity 206, thus to obtain a TM reference torque 217. The TM reference torque 217 and the feedback traction torque signal 234 are used by the traction torque regulation unit 236 to produce a current phase delay command 238.

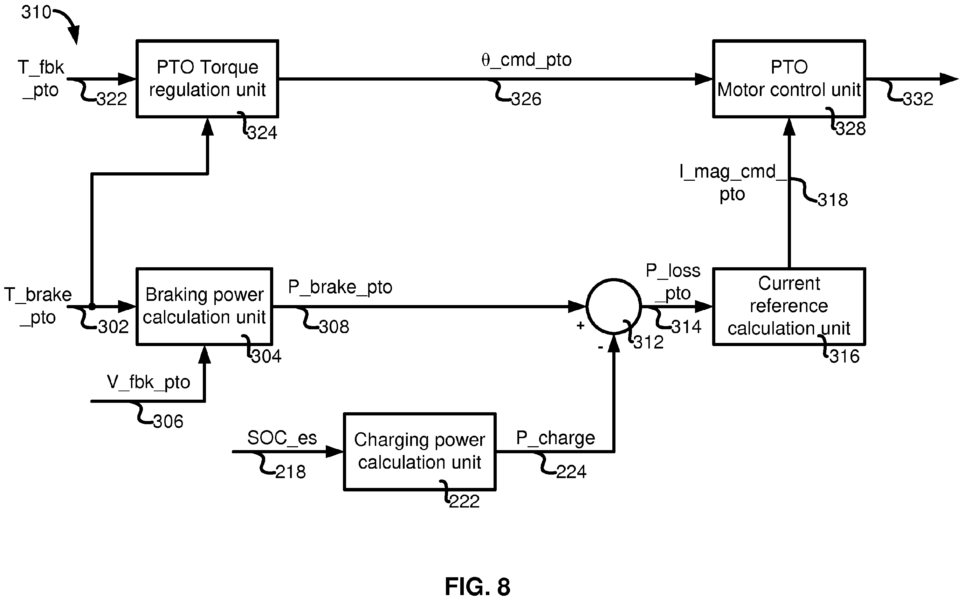

FIG. 8 is a control block diagram of the PTO electric-brake control algorithm 310 distributing the regenerative braking power from a PTO motor of a vehicle in the regenerative braking mode according to an embodiment. The PTO electric-brake control algorithm 310 may be achieved through software, through hardware, or through a combination of software and software.

Shown as FIG. 8, the PTO electric-brake control algorithm 310 includes a PTO braking power calculation unit 304, a charging power calculation unit 222, a PTO target dump calculation unit 312, a current reference calculation unit 316, a PTO motor control unit 328 and a PTO torque regulation unit 324.

The PTO braking power calculation unit 304 is configured to receive a PTO target braking torque signal 302 and a PTO feedback velocity signal 306, and calculate the TM target braking power 308 based on the following formula: E=T×V, where E is the PTO target braking power, T is the PTO target braking torque, and V is the PTO actual velocity.

In an embodiment, the PTO target dump calculation unit 312 is configured to acquire the PTO target loss power 314 through subtraction between the PTO target braking power 308 from the PTO braking power calculation unit 304 and the energy source target charge power (or energy source chargeable power) 224. In an embodiment, the energy source target charge power (or energy source chargeable power) 224 is calculated by the charging power calculation unit 222 according to the signal 218 denoting the state of charge of the energy source 102. The PTO target loss power 314 is employed by the current reference calculation unit 316 to calculate a reference current magnitude signal 318 instructing the desirable magnitude value of the current from the PTO convertor 144 to the PTO motor 106. The reference current magnitude signal 318 is provided to the PTO motor control unit 328. In an embodiment, the PTO motor control unit 328 generates a control signal 322 at least based on the reference current magnitude 318 and the current phase delay command 326 from the PTO torque regulation unit 324 to control the PTO convertor 144 to change or adjust the parameters of the power transferred to the PTO motor 148, thus the regenerative braking power of the PTO motor 148 is distributed reasonably.

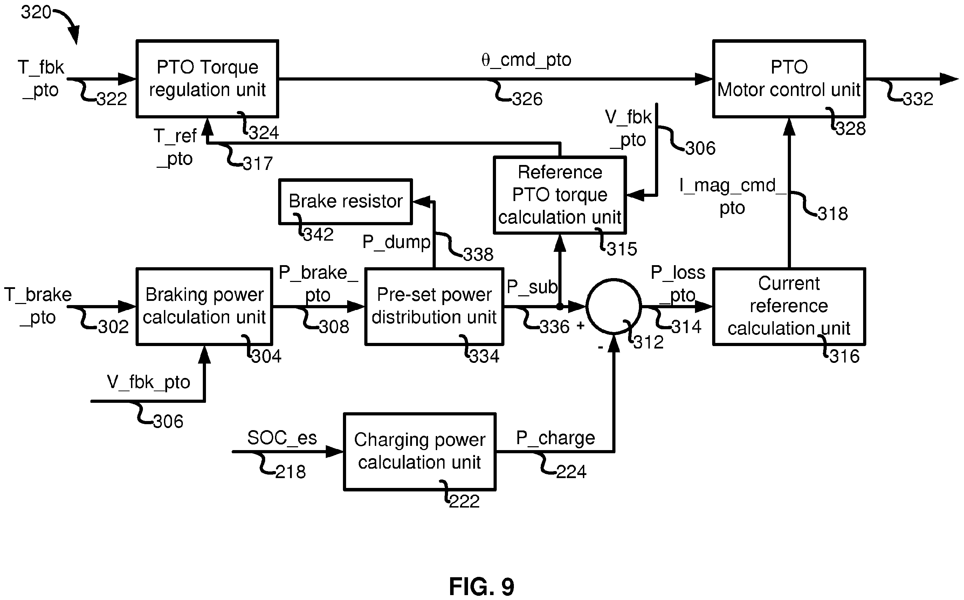

FIG. 9 is a control block diagram of the PTO electric-brake control algorithm 320 distributing the regenerative braking power from a PTO motor of a vehicle in the regenerative braking mode according to another embodiment. The PTO electric-brake control algorithm 320 shown in FIG .9 has a basic structure similar to the PTO electric-brake control algorithm 310 in FIG. 8, therefore the elements or modules symbolized with a same element symbol in this embodiment are not described in detail.

In the embodiment of FIG. 9, the PTO electric-brake control algorithm 320 further includes a pre-set power distribution unit 334. The pre-set power distribution unit 334 receives the PTO target braking power 308 calculated by the PTO braking power calculation unit 304, and distributes the PTO target braking power 308 in accordance with pre-set rules. In an embodiment, the pre-set power distribution unit 334 is configured to preferentially regenerate the PTO target braking power 308 back to the energy source 102, also i.e., when the energy source 102 can receive all the PTO target braking power 308, the pre-set power distribution unit 334 sets the target dumping power 338 distributed to a dump or braking resistor 342 as zero, and send all the sub target braking power 336 generated in the distribution back to the energy source 102. In an embodiment, when the state of charge of the energy source 102 demonstrates the energy source 102 do not have enough capacity to receive the whole TM target braking power 308, the pre-set power distribution unit 334 dissipates the rest power in the PTO motor 148 and the dump or braking resistor 342 after regenerating the PTO target braking power 308 to the energy source 102. In some embodiments, if the rest power after the PTO target braking power 308 is regenerated to the energy source 102 is smaller than the maximum loss power generated by the PTO motor 148, also i.e., when the PTO motor 148 is able to bear the rest energy after the PTO target braking power 308 charging the energy source 102, the pre-set power distribution unit 334 sets the target dumping power 338 distributed to the dump or braking resistor 342 as zero.

Furthermore, in the embodiment shown in FIG. 9, the PTO electric-brake control algorithm 320 also includes a reference PTO torque calculation unit 315. The reference PTO torque calculation unit 315 is configured to divide the sub target braking power 336 with the PTO feedback velocity 306, thus to obtain a PTO reference torque 317. The PTO torque regulation unit 324 calculates a current phase delay command 326 according to the PTO reference torque 317 and the PTO feedback torque signal 322.

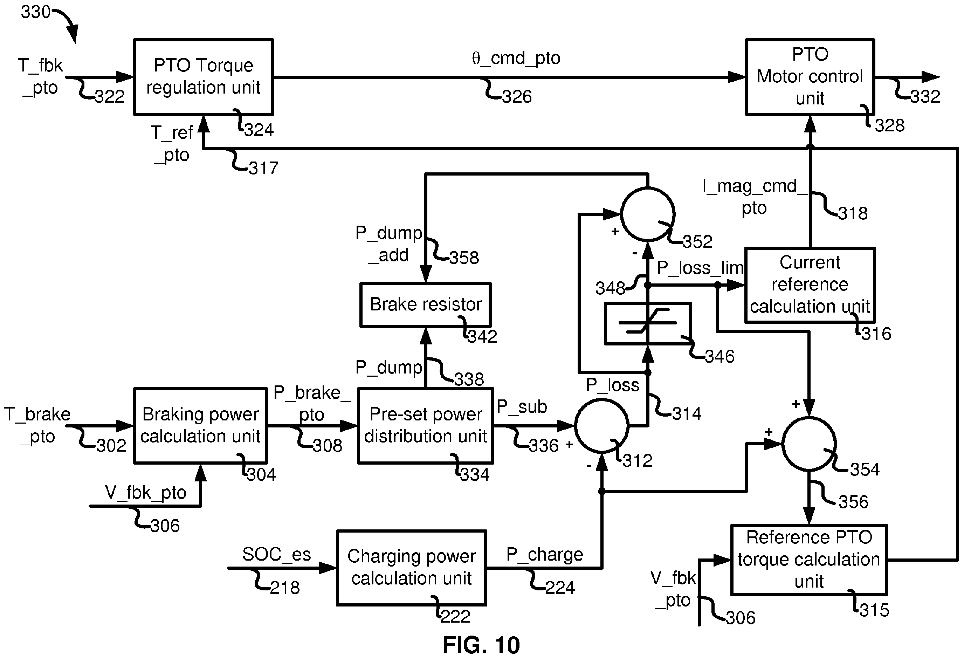

FIG. 10 is a control block diagram of the PTO electric-brake control algorithm 330 distributing the regenerative braking power from a PTO motor of a vehicle in the regenerative braking mode according to another embodiment. The PTO electric-brake control algorithm 330 shown in FIG .10 has a basic structure similar to the PTO electric-brake control algorithm 320 in FIG. 9, therefore, the elements or modules symbolized with a same element symbol in this embodiment are not described in detail.

In the embodiment of FIG. 10, the PTO electric-brake control algorithm 320 still includes a magnitude limit device 346 and a summation unit 352. The magnitude limit device 346 is coupled between the PTO target loss power calculation unit 312 and the reference current calculation unit 316. The magnitude limit unit 346 is configured in accordance with the maximum and the minimum motor loss value relative to the PTO motor 148 to limit the target loss power 314, and to supply a limited target loss power 348 to the current reference calculation unit 316. In an embodiment, the summation unit 352 is configured to acquire a power deviation signal or an extra target dumping power 358 through subtraction between the non-limited target loss power 314 and limited target loss power 348. When the power deviation signal 358 is positive, it means that the target loss power 314 is larger than the maximum loss power generated by the TM 148, therefore, in an embodiment, the power deviation signal 358 is employed to control the braking resistor 342 to generate a braking force, and the extra target loss power is dissipated by the braking resistor 342.

Furthermore, in the embodiment shown in FIG. 10, the PTO electric-brake control algorithm 330 also includes a summation unit 354 and a reference PTO torque calculation unit 315. The summation unit 354 is configured to add the energy source target charge power (or energy source chargeable power) 224 of the charging power calculation unit 222 to the limited target loss power 348, so as to get a hybrid power 356. The reference PTO torque calculation unit 315 is configured to divide the hybrid power 356 with the PTO motor feedback velocity signal 306, thus to obtain a PTO reference torque 317. The PTO reference torque 317 and the PTO feedback torque 322 are used by the PTO torque regulation unit 324 to produce a current phase delay command 326.

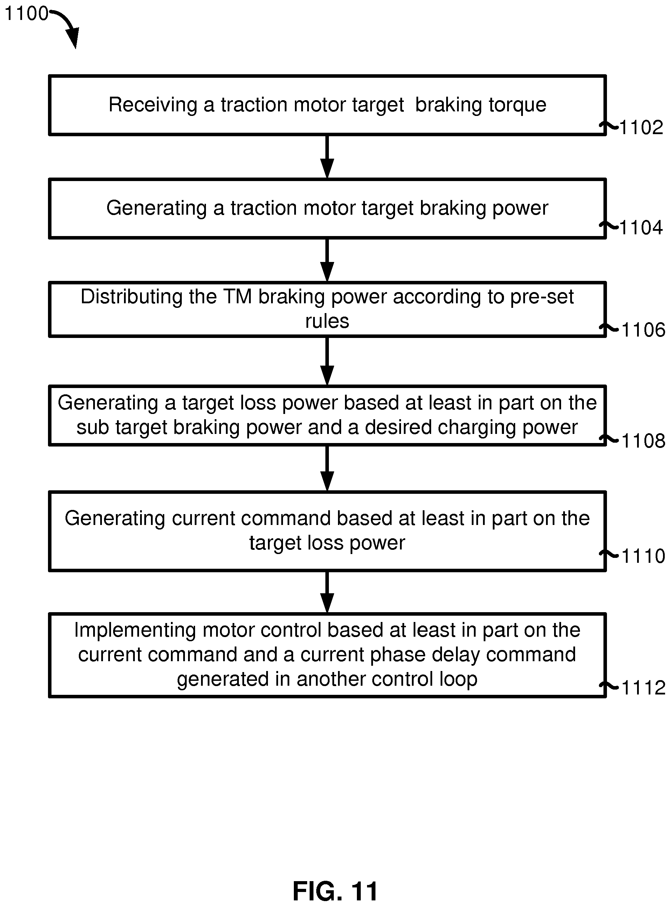

FIGS. 11 to 14 are flowcharts of the methods 1100, 1200, 1300 and 1400 for controlling the vehicles. To be understood, the methods 1300, 1400 herein are at least able to be operated by the vehicles 100, 110, 120, 130 and 140 mentioned above. To describe these flowcharts conveniently, every step of the methods 1100, 1200, 1300 and 1400 in the below detailed description, will be introduced mainly in conjunction with one or more elements of the vehicle 120, however, to one of ordinary skill in the art which belongs to, every step of these methods 1100, 1200, 1300 1400 is not limited to one or more parts herein, in addition, also to be noticed, at least a portion of steps of the methods 1100, 1200, 1300, 1400 may be programmed to program commands or computer software, and saved in a storage medium readable to a computer or a processor. When the program commands are operated by a computer or a processor, it could achieve every step as the workflow chart methods 1100, 1200, 1300 and 1400. Understandably, computer readable mediums may include the volatile and nonvolatile, movable and non-movable mediums achieved in any method or technology. More specifically, the computer readable medium includes but is not limited to a random access memory, read only memory, electrically erasable read-only memory, flash memory, or other memory technology, CD-ROM, digital optical disk storage, or other forms of optical storage, magnetic cassettes, magnetic tape, disk, or other forms of magnetic memory, and any other form of storage mediums configured to store reservation information able to be accessed by a command operating system.

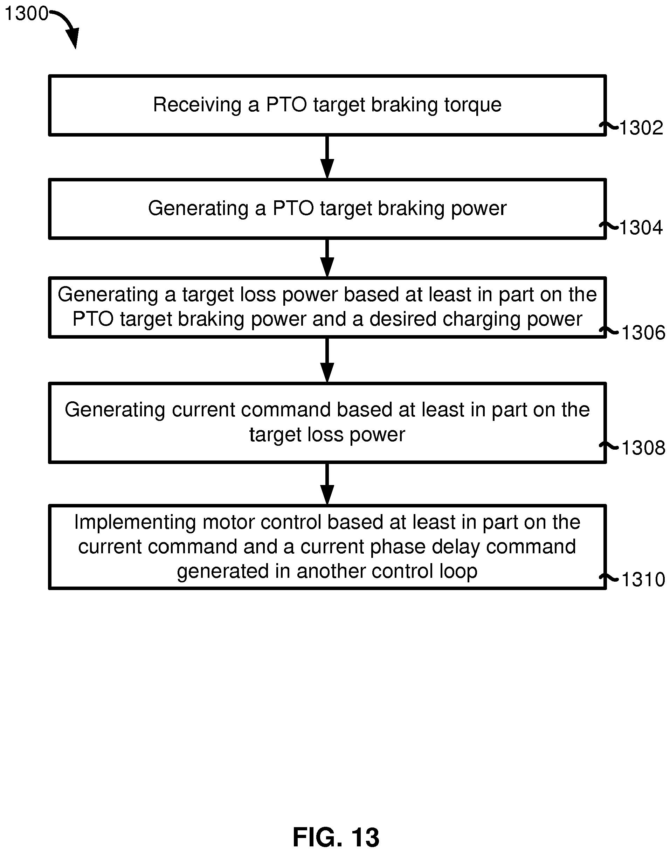

Referring to FIG. 13, the method 1100 includes a step 1102 where the TM target braking torque is received. In some embodiments, the controller 116 (shown in FIG. 3) receives a first command 126, which instructs the braking torque desirable to be obtained corresponding to the TM 106, as well, in different working conditions, the first command 126 may have different values, such as, when the vehicle 120 operating in a high speed, it may input a braking torque command with a comparatively larger value; yet the vehicle 120 in a low speed, it may input a braking torque command with a relatively smaller value.

In an embodiment, the method 1100 still includes a step 1104 where the TM target braking power is generated at least based on the TM target braking torque from the step 1102. For instance, in an embodiment, when the controller 116 is operating the TM electric-brake control algorithm 118, the TM braking power calculation unit 204 in FIG. 6 may be employed to calculate the TM target braking power based on the TM target braking torque 202 and the TM feedback velocity 206.

In an embodiment, the method 1100 still includes a step 1106 where the TM target braking power calculated in the step 1104 is distributed according to pre-set rules. In an embodiment, when operating the step 1106, the energy is distributed according to the state of charge of the energy source 102, such as, when the energy source 102 may receive all the TM target braking power, meanwhile, the TM may transfer all the target braking power generated according to the target braking torque to the energy source 102. In another embodiment, when operating the step 1106, it may also distribute the energy according to the loss power produced by the TM 148. For example, when the state of charge of the energy source 102 denotes the energy source 102 do not have enough capacity to receive all the TM target braking power 208, and the rest energy after the TM target braking power 208 regenerated back to the energy source 102 is smaller than the maximum loss power of the TM 106, also i.e., when the TM 106 may bear the rest energy after the TM target braking power 208 charging the energy source 102, it may regenerate a portion of the TM target braking power 208 back to the energy source 102, and the rest portion is dissipated in the TM 106. In other embodiments, when the state of charge of the energy source 102 denotes the energy source 102 does not have enough capacity to receive all the TM target braking power 208, and the rest energy after the TM target braking power 208 regenerated to the energy source 102 is larger than the maximum loss power of the TM 106, also i.e., the TM 106 fails to bear rest energy after the TM target braking power 208 charging the energy source 102, a portion of the TM target braking power 208 is dissipated in the mechanical braking device.

In an embodiment, the method 1100 still includes a step 1108 where the TM target loss power is generated according to step 1106 operating energy distribution rules. As above, the TM target loss power has different values in different conditions.

In an embodiment, the method 1100 still includes a step 1110 where the TM target loss power is generated at least according to the reference current signal. In an embodiment, the reference current calculation unit 228 as FIG. 6 may be configured to calculate the reference current magnitude 232 in accordance with the TM target dump 226.

In an embodiment, the method 1100 still includes a step 1112 where motor control is implemented based at least in part on a current command (e.g. reference current magnitude signal) produced in the step 1110 and a current phase delay command of another one control circuit. In an embodiment, the TM control unit 242 in FIG. 6 is configured to generate the control signal 244 according to the current magnitude reference signal 232 and the current phase delay command 238, to control the power 124 transferred from the TM convertor 104 to the TM 106, thus the power from the TM 106 in braking is distributed reasonably.

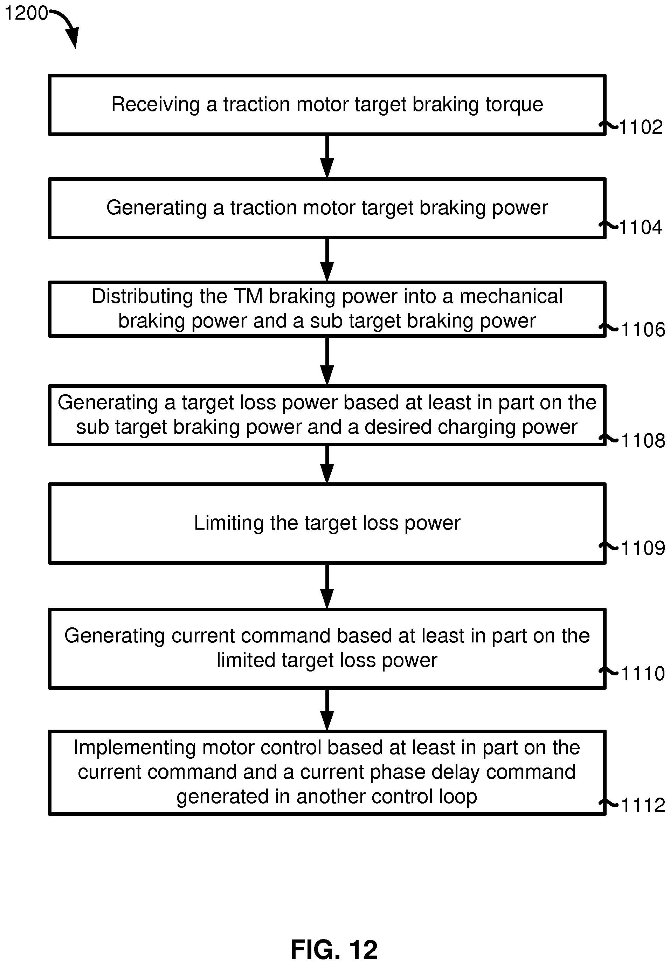

Understandably, the method 1100 for controlling the vehicle in FIG. 11 may be changed in a specific way. For example, FIG. 12 is a flow chart of the method 1300 for controlling the vehicle according to another embodiment. The method 1200 in FIG. 12 is substantially similar to the method 1100 in FIG. 11. For example, FIG. 12 still includes the step 1102, 1104, 1106 and 1108, etc. Specially, in the embodiment of FIG. 12, the method 1200 still includes a step 1109 after the step 1108 where the target loss power in 1108 is limited so as to avoid the target loss power exceeding the maximum loss value of the TM. In an embodiment shown in FIG. 7, the magnitude limit element 252 is configured to limit the target loss power value 226 according to the maximum motor loss value and minimum motor loss value relative to the TM 106. Afterwards, in the step 1110, the reference current command is generated based on the limited target loss power, such as a reference current magnitude command.

FIG. 13 is a flow chart of the method 1300 for controlling the vehicle according to another embodiment. Specially, the method 1300 is configured to distribute the energy generated by the PTO motor of the vehicle in braking.

In an embodiment, the method includes a step 1302 where the PTO target braking torque is received. In some embodiments, the controller 116 (shown in FIG. 3) receives the second command 138 which instructs the desirably obtaining braking torque corresponding to the PTO motor 148, and in different working conditions the second command 138 may have different values. For example, in some cases, for the security concern, when the PTO device 152 (e.g. a rotary cutter) drove by the PTO motor 148 works abnormally, the braking torque command with a relative large value is input to be braked fast. And when PTO device 152 works normally, the braking torque command with a small value is input.

In an embodiment, the method 1300 still includes a step 1304 where a PTO target braking power is generated based at least in part on the PTO target braking torque from the step 1302. For instance, in an embodiment, when the controller 116 operates the PTO electric-brake control algorithm 123, the PTO braking power calculation unit 304 in FIG. 10 is employed to calculate the PTO target braking power according to the PTO motor target braking torque 302 and the PTO motor feedback velocity 306.

In an embodiment, the method 1300 still includes a step 1306 where a PTO target loss power is generated. In an embodiment, the PTO target loss power calculation unit 312 in FIG. 10 may be employed to subtract the PTO motor target braking power 308 from the energy source target charge energy (or energy source chargeable energy) 224 to obtain the PTO motor target loss power 314.

In an embodiment, the method 1300 still includes a step 1308 where a reference current signal (or current command) is generated based at least in part on the PTO motor target loss power from the step 1306. In an embodiment, the reference current calculation unit 312 in FIG. 10 may be employed to calculate the reference current magnitude signal 318 according to the PTO motor target loss power 314.

In an embodiment, the method 1300 still includes a step 1310 where the motor control is implemented based at least in part on the reference current signal (e.g. reference current magnitude signal) from the step 1308 and the current phase delay command of another one control circuit. In an embodiment, the PTO motor control unit 328 in FIG. 10 is employed to generate the control signal 332 according to the current magnitude reference signal 312 and the current phase delay command 326, to control the power 124 transferred from the PTO motor convertor 144 to the PTO motor 148, thus the energy from the PTO motor 148 in braking is distributed reasonably.

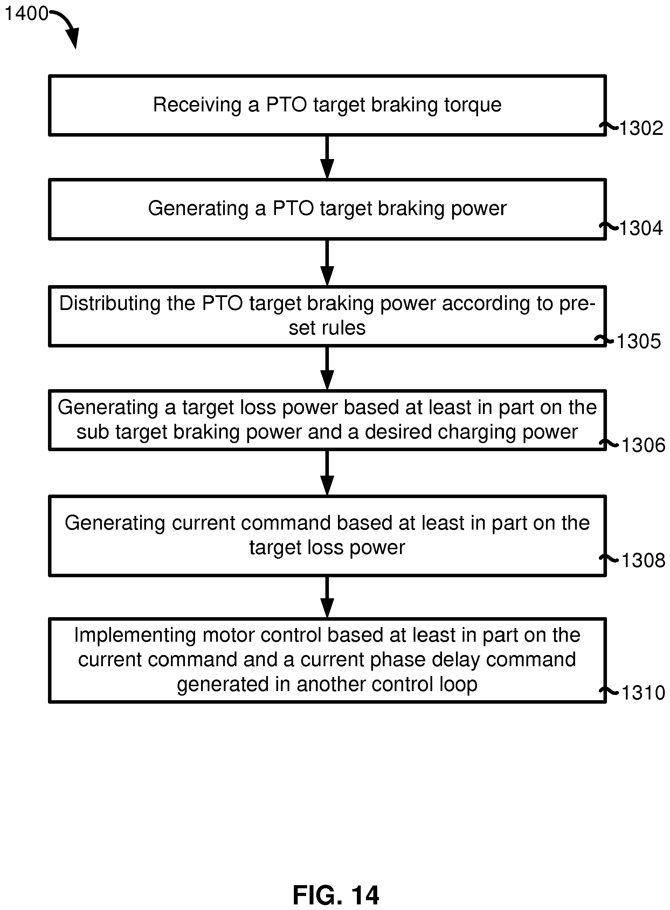

Understandably, the method 1300 controlling the vehicle operating in FIG. 13 may be changed in a specific way. For example, FIG. 14 is a flow chart of a method 1400 for controlling the vehicle according to another embodiment. The method 1400 in FIG. 14 is substantially similar to the method 1300 in FIG. 13. For example, FIG. 14 still includes a step 1302, 1304, 1306, 1308 and 1310. Specially, in the embodiment of FIG. 14, the method 1400 still includes the step 1305 after the step 1304 where the PTO motor target braking power from the step 1304 is distributed in a pre-set rule. In an embodiment, when operating the step 1305, the power is distributed according to the state of charge of the energy source 102. For example, when the energy source 102 could receive all PTO target braking power, all the PTO target braking power generated by the PTO motor according to the target braking torque is transferred to the energy source 102. When the energy source 102 fails to receive all PTO target braking power, the rest energy after the PTO motor target braking power is supplied to the energy source 102 may be dissipated in the PTO motor 148. In another embodiment, a portion of the rest power after the PTO motor target braking power supplied to the energy source 102 is dissipated in the PTO motor 148, and the other portion dissipates in the dump or the braking resistor 342.

Furthermore, in some embodiments, similar to operating the TM electric-brake control method, the method 1400 after the step 1306 may also include a step where the PTO target loss power is limited according to maximum motor loss value and the minimum motor loss value of the PTO motor. If the PTO target loss value is larger than the maximum motor loss value generated from the PTO motor, in an embodiment, a braking resistor may be used to dissipate extra energy.

While only certain features of the invention have been illustrated and described herein in conjunction with typical embodiments, many modifications and changes will occur to those skilled in the art. It is, therefore, to be understood that the appended claims are intended to cover all such modifications and changes as fall within the scope of the invention.

## Claims

1. An apparatus, comprising:
an energy source, ES, (102) configured to provide electrical power during discharging mode of operation and receive electrical power during charging mode of operation; and
an electric drive system (101), comprising;
a converter (104) coupled to the energy source (102), the converter (104) configured to convert the electrical power received from the energy source (102) into drive electrical power, and configured to convert regenerative electrical power into charge electrical power for charging the energy source (102);
at least one motor (106) coupled to the converter (104), the motor (106) configured to receive the drive electrical power provided from the converter (104) and provide mechanical power for driving at least one load (103) in drive mode of operation, and configured to convert mechanical power from the load (103) into the regenerative electrical power in regenerative mode of operation; and
a controller (108, 116) coupled to the energy source (102), converter (104), and at least one motor (106), the controller (108, 116) configured to receive at least one first parameter indicating charging status of the energy source (102), and configured to receive at least one second parameter indicating operation condition of the at least one motor (106),
wherein the controller (108, 116) is configured to send control signals to the converter (104), based at least in part on a braking command, the at least one first parameter, and the at least one second parameter to allow the electric drive system (101) to controllably generate loss power resulting from the regenerative electrical power.

2. The apparatus of claim 1, wherein the at least one motor (106) comprises brushless direct-current, BLDC, motor (106) configured to controllably generate loss power resulting from the regenerative electrical power.

3. The apparatus of claim 1 or claim 2, wherein the at least one motor (106) comprises a traction motor (106), the load (103) comprises at least one driving wheel coupled to the traction motor (106), and the apparatus further comprises at least one mechanical braking device (134, 136, 248) attached to the at least one driving wheel.

4. The apparatus of any preceding claim, wherein the controller (108, 116) comprises:
a traction motor, TM, (106) braking power calculation unit (204) configured to calculate a TM target braking power according to a TM target braking torque and a TM feedback velocity;
a pre-set power distribution unit configured to distribute the TM target braking power into a target mechanical braking power for the mechanical braking device (134, 136, 248) and a sub target braking power which is a combination of a TM target loss power and a target energy source charging power; and
a calculation unit (312) configured to calculate the TM target loss power by subtracting the target ES charging power from the sub target braking power.

5. The apparatus of any preceding claim, wherein the controller (108, 116) comprises:
a current reference calculation unit (228) configured to generate a TM current magnitude command based at least in part on the target TM loss power;
a TM torque regulation unit configured to generate a TM current phase delay command based at least in part on the TM feedback torque and a TM target torque; and
a TM motor (106) control unit configured to generate the control signals for the converter (104) based at least in part on the TM current magnitude command and the TM current phase delay command.

6. The apparatus of any preceding claim, wherein the controller (108, 116) comprises a TM target torque calculation unit (215) configured to calculate the TM target torque based at least in part on the sub target braking power and the TM feedback velocity.

7. The apparatus of any preceding claim, wherein the controller (108, 116) comprises a charging power calculation unit (204) configured to generate the target ES charging power based at least in part on a state of charge (SOC) parameter of the energy source (102).

8. The apparatus of any preceding claim, wherein the controller (108, 116) comprises:
a limiting element configured to limit the target TM loss power according to a maximum power limit and a minimum power limit; and
a summation element configured to subtract a limited version of the target TM loss power from an unlimited version of the target TM loss power and provide an additional mechanical braking power for the mechanical braking device (134, 136, 248).

9. The apparatus of any preceding claim, wherein the at least one motor (106) comprises a power take-off, PTO, motor (106) for the target braking power of the TM to be distributed to, the load (103) comprises at least one implement coupled to the PTO motor (106).

10. The apparatus of any preceding claim, wherein the controller (108, 116) comprises:
a power take-off, PTO, braking power calculation unit (204) configured to calculate a PTO target braking power according to a PTO target braking torque and a PTO feedback velocity; and
a calculation unit (312) configured to calculate a PTO target loss power by subtracting a target ES charging power from the PTO target braking power.

11. The apparatus of any preceding claim, wherein the controller (108, 116) comprises:
a current reference calculation unit (228) configured to generate a power take-off, PTO, current magnitude command based at least in part on the PTO target loss power;
a PTO torque regulation unit (215) configured to generate a PTO current phase delay command based at least in part on the PTO feedback torque and a PTO target torque; and
a PTO motor (106) control unit configured to generate the control signals for the converter (104) based at least in part on the PTO current magnitude command and the PTO current phase delay command.

12. The apparatus of any preceding claim, wherein the apparatus comprises at least one dump resistor (156) attached in association with a power take-off, PTO, implement, the controller (108, 116) comprises a pre-set power distribution unit configured to distribute the PTO target braking power into a target dumping power for the at least one dump resistor (156) and a sub target braking power which is combination of the PTO target loss power and the target energy source charging power.

13. The apparatus of any preceding claim, wherein the controller (108, 116) comprises a power take-off, PTO, reference torque calculation unit (215) configured to calculate the PTO target torque based at least in part on the sub target braking power and the PTO feedback velocity.

14. A vehicle, comprising:
an energy source (102) configured to provide electrical power during discharging mode of operation and receive electrical power during charging mode of operation;
an electric drive system (101) comprising:
a converter (104) coupled to the energy source (102), the converter (104) configured to convert the electrical power received from the energy source (102) into drive electrical power, and configured to convert regenerative electrical power into charge electrical power for charging the energy source (102);
at least one motor (106) coupled to the converter (104), the motor (106) configured to receive the drive electrical power provided from the converter (104) and provide mechanical power for driving at least one load (103), and configured to convert mechanical power from the load (103) into the regenerative electrical power; and
a controller (108, 116) coupled to the energy source (102), converter (104), and at least one motor (106),
wherein the controller (108, 116) is configured to send first control signals to the converter (104), based at least in part on a first braking command, to allow a first target braking power corresponding to the first braking command to be solely charged into the energy source (102),
wherein the controller (108, 116) is further configured to send second control signals to the converter (104), based at least in part on a second braking command, to allow a second target braking power corresponding to the second braking command to be partly charged into the energy source (102) and partly dissipated by the at least one motor (106).

15. A method for operating a vehicle, comprising:
receiving a target braking torque for a motor (106) of the vehicle;
generating a target braking power based at least in part on the target braking torque;
distributing the target braking power into a target loss power depending on charging status of an energy storage of the vehicle;
calculating reference commands based at least in part on the target loss power; and
implementing a control for generating control signals based at least in part on the reference commands to allow the target loss power to be dissipated by an electric drive system (101) of the vehicle.

## Patentansprüche

1. Vorrichtung, umfassend:
eine Energiequelle, ES, (102), die konfiguriert ist, um während eines Entladebetriebs elektrische Energie bereitzustellen und während eines Ladebetriebs elektrische Energie zu empfangen; und
ein elektrisches Antriebssystem (101), umfassend;
einen Wandler (104), der mit der Energiequelle (102) gekoppelt ist, wobei der Wandler (104) konfiguriert ist, um die von der Energiequelle (102) empfangene elektrische Energie in elektrische Antriebsleistung umzuwandeln, und konfiguriert ist, um regenerative elektrische Leistung in elektrische Ladeleistung zum Laden der Energiequelle (102) umzuwandeln;
mindestens einen Motor (106), der mit dem Wandler (104) gekoppelt ist, wobei der Motor (106) konfiguriert ist, um im Antriebsmodus die von dem Wandler (104) bereitgestellte elektrische Antriebsleistung zu empfangen und mechanische Leistung zum Antreiben mindestens einer Last (103) bereitzustellen, und konfiguriert ist, um im regenerativen Betriebsmodus mechanische Leistung von der Last (103) in regenerative elektrische Leistung umzuwandeln; und
eine Steuerung (108, 116), die mit der Energiequelle (102), dem Wandler (104) und mindestens einem Motor (106) gekoppelt ist, wobei die Steuerung (108, 116) konfiguriert ist, um mindestens einen ersten Parameter zu empfangen, der den Ladestatus der Energiequelle (102) anzeigt, und konfiguriert ist, um mindestens einen zweiten Parameter zu empfangen, der den Betriebszustand des mindestens einen Motors (106) anzeigt,
wobei die Steuerung (108, 116) konfiguriert ist, um Steuersignale an den Wandler (104) zu senden, die zumindest teilweise auf einem Bremsbefehl, dem mindestens einen ersten Parameter und dem mindestens einen zweiten Parameter basieren, um dem elektrischen Antriebssystem (101) zu ermöglichen, kontrolliert Verlustleistung zu erzeugen, die sich aus der regenerativen elektrischen Leistung ergibt.

2. Vorrichtung nach Anspruch 1, wobei der mindestens eine Motor (106) einen bürstenlosen Gleichstrommotor, BLDC-Motor (106), umfasst, der konfiguriert ist, um kontrolliert Verlustleistung zu erzeugen, die sich aus der regenerativen elektrischen Leistung ergibt.

3. Vorrichtung nach Anspruch 1 oder Anspruch 2, wobei der mindestens eine Motor (106) einen Fahrmotor (106) umfasst, die Last (103) mindestens ein mit dem Fahrmotor (106) gekoppeltes Antriebsrad umfasst und die Vorrichtung ferner mindestens eine mechanische Bremsvorrichtung (134, 136, 248) umfasst, die an dem mindestens einen Antriebsrad angebracht ist.

4. Vorrichtung nach einem der vorhergehenden Ansprüche, wobei die Steuerung (108, 116) umfasst:
einen Fahrmotor, TM (106), Bremsleistungsberechnungseinheit (204), die konfiguriert ist, um eine Soll-TM-Bremsleistung gemäß einem Soll-TM-Bremsmoment und einer Ist-TM-Geschwindigkeit zu berechnen;
eine voreingestellte Leistungsverteilungseinheit, die konfiguriert ist, um die Soll-TM-Bremsleistung auf eine mechanische Soll-Bremsleistung für die mechanische Bremsvorrichtung (134, 136, 248) und eine Untersoll-Bremsleistung zu verteilen, die eine Kombination aus einer Soll-TM-Verlustleistung und einer Soll-Energiequelle-Ladeleistung ist; und
eine Berechnungseinheit (312), die konfiguriert ist, um die Soll-TM-Verlustleistung durch Subtrahieren der Soll-ES-Ladeleistung von der Untersoll-Bremsleistung zu berechnen.

5. Vorrichtung nach einem der vorhergehenden Ansprüche, wobei die Steuerung (108, 116) umfasst:
eine Stromreferenzberechnungseinheit (228), die konfiguriert ist, um einen TM-Stromgrößenbefehl zu erzeugen, der zumindest teilweise auf der Soll-TM-Verlustleistung basiert;
eine TM-Drehmomentregeleinheit, die konfiguriert ist, um einen TM-Stromphasenverzögerungsbefehl zu erzeugen, der zumindest teilweise auf dem Ist-TM-Drehmoment und einem Soll-TM-Drehmoment basiert; und
eine Steuereinheit für den TM-Motor (106), die konfiguriert ist, um die Steuersignale für den Wandler (104) zumindest teilweise basierend auf dem TM-Stromgrößenbefehl und dem TM-Stromphasenverzögerungsbefehl zu erzeugen.

6. Vorrichtung nach einem der vorhergehenden Ansprüche, wobei die Steuerung (108, 116) eine Soll-TM-Drehmoment-Berechnungseinheit (215) umfasst, die konfiguriert ist, um das Soll-TM-Drehmoment zumindest teilweise basierend auf der Untersoll-Bremsleistung und der Ist-TM-Geschwindigkeit zu berechnen.

7. Vorrichtung nach einem der vorhergehenden Ansprüche, wobei die Steuerung (108, 116) eine Ladeleistungsberechnungseinheit (204) umfasst, die konfiguriert ist, um die Soll-ES-Ladeleistung zumindest teilweise basierend auf einem Ladezustands- (SOC-) Parameter der Energiequelle zu erzeugen (102).

8. Vorrichtung nach einem der vorhergehenden Ansprüche, wobei die Steuerung (108, 116) umfasst:
ein Begrenzungselement, das konfiguriert ist, um die Soll-TM-Verlustleistung entsprechend einer maximalen Leistungsgrenze und einer minimalen Leistungsgrenze zu begrenzen; und
ein Summationselement, das konfiguriert ist, um eine begrenzte Version der Soll-TM-Verlustleistung von einer unbegrenzten Version der Soll-TM-Verlustleistung zu subtrahieren und eine zusätzliche mechanische Bremsleistung für die mechanische Bremsvorrichtung bereitzustellen (134, 136, 248).

9. Vorrichtung nach einem der vorhergehenden Ansprüche, wobei der mindestens eine Motor (106) einen Nebenabtriebsmotor, PTO-Motor (106), umfasst, auf den die Soll-Bremsleistung des TM verteilt werden soll, wobei die Last (103) mindestens ein mit dem PTO-Motor (106) gekoppeltes Gerät umfasst.

10. Vorrichtung nach einem der vorhergehenden Ansprüche, wobei die Steuerung (108, 116) umfasst:
eine Nebenabtriebs-/PTO-Bremsleistungsberechnungseinheit (204), die konfiguriert ist, um eine Soll-PTO-Bremsleistung gemäß einem Soll-PTO-Bremsmoment und einer Ist-PTO-Geschwindigkeit zu berechnen; und
eine Berechnungseinheit (312), die konfiguriert ist, um eine Soll-PTO-Verlustleistung durch Subtrahieren einer Soll-ES-Ladeleistung von der Soll-PTO-Bremsleistung zu berechnen.

11. Vorrichtung nach einem der vorhergehenden Ansprüche, wobei die Steuerung (108, 116) umfasst:
eine Stromreferenzberechnungseinheit (228), die konfiguriert ist, um einen Nebenantriebs-/PTO-Stromstärkenbefehl zu erzeugen, der zumindest teilweise auf der Soll-PTO-Verlustleistung basiert;
eine PTO-Drehmomentregeleinheit (215), die konfiguriert ist, um einen PTO-Stromphasenverzögerungsbefehl zu erzeugen, der zumindest teilweise auf dem Ist-PTO-Drehmoment und einem Soll-PTO-Drehmoment basiert; und
eine Steuereinheit für den PTO-Motor (106), die konfiguriert ist, um die Steuersignale für den Wandler (104) zumindest teilweise basierend auf dem PTO-Stromstärkenbefehl und dem PTO-Stromphasenverzögerungsbefehl zu erzeugen.

12. Vorrichtung nach einem der vorhergehenden Ansprüche, wobei die Vorrichtung mindestens einen Spannungspitzen-Widerstand (156) umfasst, der in Verbindung mit einem Nebenabtriebs-/PTO-Gerät angebracht ist, wobei die Steuerung (108, 116) eine voreingestellte Leistungsverteilungseinheit umfasst, die konfiguriert ist, um die Soll-PTO-Bremsleistung auf eine Soll-Spannungsspitzenleistung für den mindestens einen Spannungsspitzen-Widerstand (156) und eine Untersoll-Bremsleistung zu verteilen, die eine Kombination aus der Soll-PTO-Verlustleistung und der Soll-Energiequelle-Ladeleistung ist.

13. Vorrichtung nach einem der vorhergehenden Ansprüche, wobei die Steuerung (108, 116) eine Nebenabtriebs-/PTO-Referenzdrehmomentberechnungseinheit (215) umfasst, die konfiguriert ist, um das Soll-PTO-Drehmoment zumindest teilweise basierend auf der Untersoll-Bremsleistung und der Ist-PTO-Geschwindigkeit zu berechnen.

14. Fahrzeug, umfassend:
eine Energiequelle (102), die konfiguriert ist, um während des Entladebetriebs elektrische Energie bereitzustellen und während des Ladebetriebs elektrische Energie zu empfangen;
ein elektrisches Antriebssystem (101), umfassend:
einen Wandler (104), der mit der Energiequelle (102) gekoppelt ist, wobei der Wandler (104) konfiguriert ist, um die von der Energiequelle (102) empfangene elektrische Energie in elektrische Antriebsleistung umzuwandeln, und konfiguriert ist, um regenerative elektrische Leistung in elektrische Ladeleistung zum Laden der Energiequelle (102) umzuwandeln;
mindestens einen Motor (106), der mit dem Wandler (104) gekoppelt ist, wobei der Motor (106) konfiguriert ist, um die vom Wandler (104) bereitgestellte elektrische Antriebsleistung zu empfangen und mechanische Leistung zum Antreiben mindestens einer Last (103) bereitzustellen, und konfiguriert ist, mechanische Leistung von der Last (103) in regenerative elektrische Leistung umzuwandeln; und
eine Steuerung (108, 116), die mit der Energiequelle (102), dem Wandler (104) und mindestens einem Motor (106) gekoppelt ist,
wobei die Steuerung (108, 116) konfiguriert ist, um erste Steuersignale an den Wandler (104) zu senden, die zumindest teilweise auf einem ersten Bremsbefehl basieren, um zu ermöglichen, dass eine erste Soll-Bremsleistung, die dem ersten Bremsbefehl entspricht, ausschließlich in die Energiequelle (102) geladen wird,
wobei die Steuerung (108, 116) ferner konfiguriert ist, um zweite Steuersignale an den Wandler (104) zu senden, die zumindest teilweise auf einem zweiten Bremsbefehl basieren, um zu ermöglichen, dass eine zweite Soll-Bremsleistung, die dem zweiten Bremsbefehl entspricht, teilweise in die Energiequelle (102) geladen wird und teilweise von dem mindestens einen Motor (106) abgeführt wird.

15. Verfahren zum Betreiben eines Fahrzeugs, umfassend:
Empfangen eines Soll-Bremsmoments für einen Motor (106) des Fahrzeugs;
Erzeugen einer Soll-Bremsleistung, die zumindest teilweise auf dem Soll-Bremsmoment basiert;
Verteilen der Soll-Bremsleistung auf eine Soll-Verlustleistung in Abhängigkeit vom Ladestatus eines Energiespeichers des Fahrzeugs;
Berechnen von Referenzbefehlen, die zumindest teilweise auf der Soll-Verlustleistung basieren; und
Implementieren einer Steuerung zum Erzeugen von Steuersignalen, die zumindest teilweise auf den Referenzbefehlen basieren, um zu ermöglichen, dass die Soll-Verlustleistung durch ein elektrisches Antriebssystem (101) des Fahrzeugs abgeführt wird.

## Revendications

1. Appareil comprenant :
une source d'énergie, ES, (102) configurée pour fournir de la puissance électrique pendant un mode de fonctionnement de décharge et recevoir de la puissance électrique pendant un mode de fonctionnement de charge ; et
un système d'entraînement électrique (101) comprenant ;
un convertisseur (104) couplé à la source d'énergie (102), le convertisseur (104) étant configuré pour convertir la puissance électrique reçue de la source d'énergie (102) en puissance électrique d'entraînement et configuré pour convertir une puissance électrique régénérative en puissance électrique de charge pour charger la source d'énergie (102) ;
au moins un moteur (106) couplé au convertisseur (104), le moteur (106) étant configuré pour recevoir la puissance électrique d'entraînement fournie depuis le convertisseur (104) et fournir de la puissance mécanique pour entraîner au moins une charge (103) en mode de fonctionnement d'entraînement et configuré pour convertir la puissance mécanique provenant de la charge (103) en la puissance électrique régénérative en mode de fonctionnement régénératif ; et
un dispositif de commande (108, 116) couplé à la source d'énergie (102), au convertisseur (104) et à au moins un moteur (106), le dispositif de commande (108, 116) étant configuré pour recevoir au moins un premier paramètre indiquant un état de charge de la source d'énergie (102) et configuré pour recevoir au moins un second paramètre indiquant une condition de fonctionnement du au moins un moteur (106),
dans lequel le dispositif de commande (108, 116) est configuré pour envoyer des signaux de commande au convertisseur (104), sur la base au moins en partie d'un ordre de freinage, du au moins un premier paramètre et du au moins un second paramètre pour permettre au système d'entraînement électrique (101) de générer de manière commandable de la puissance de perte résultant de la puissance électrique régénérative.

2. Appareil selon la revendication 1, dans lequel le au moins un moteur (106) comprend un moteur à courant continu sans balai, BLDC, (106) conçu pour générer de manière commandable de la puissance de perte résultant de la puissance électrique régénérative.

3. Appareil selon la revendication 1 ou la revendication 2, dans lequel le au moins un moteur (106) comprend un moteur de traction (106), la charge (103) comprend au moins une roue motrice couplée au moteur de traction (106) et l'appareil comprend en outre au moins un dispositif de freinage mécanique (134, 136, 248) fixé à le au moins une roue motrice.

4. Appareil selon l'une quelconque des revendications précédentes, dans lequel le dispositif de commande (108, 116) comprend :
une unité de calcul de puissance de freinage (204) de moteur de traction, TM, (106) configurée pour calculer une puissance de freinage cible de TM selon un couple de freinage cible de TM et une vitesse de rétroaction de TM ;
une unité de distribution de puissance préréglée configurée pour distribuer la puissance de freinage cible de TM en une puissance de freinage mécanique cible pour le dispositif de freinage mécanique (134, 136, 248) et une sous-puissance de freinage cible qui est une combinaison d'une puissance de perte cible de TM et d'une puissance de charge de source d'énergie cible ; et
une unité de calcul (312) configurée pour calculer la puissance de perte cible de TM en soustrayant la puissance de charge d'ES cible de la sous-puissance de freinage cible.

5. Appareil selon l'une quelconque des revendications précédentes, dans lequel le dispositif de commande (108, 116) comprend :
une unité de calcul de référence de courant (228) configurée pour générer un ordre d'amplitude de courant de TM sur la base au moins en partie de la puissance de perte de TM cible ;
une unité de régulation de couple de TM configurée pour générer un ordre de retard de phase de courant de TM sur la base au moins en partie du couple de rétroaction de TM et d'un couple cible de TM ; et
une unité de commande de moteur de TM (106) configurée pour générer les signaux de commande pour le convertisseur (104) sur la base, au moins en partie, de l'ordre d'amplitude de courant de TM et de l'ordre de retard de phase de courant de TM.

6. Appareil selon l'une quelconque des revendications précédentes, dans lequel le dispositif de commande (108, 116) comprend une unité de calcul de couple cible de TM (215) configurée pour calculer le couple cible de TM sur la base, au moins en partie, de la sous-puissance de freinage cible et de la vitesse de rétroaction de TM.

7. Appareil selon l'une quelconque des revendications précédentes, dans lequel le dispositif de commande (108, 116) comprend une unité de calcul de puissance de charge (204) configurée pour générer la puissance de charge d'ES cible sur la base, au moins en partie, d'un paramètre d'état de charge (SOC) de la source d'énergie (102).

8. Appareil selon l'une quelconque des revendications précédentes, dans lequel le dispositif de commande (108, 116) comprend :
un élément limiteur configuré pour limiter la puissance de perte de TM cible selon une limite de puissance maximale et une limite de puissance minimale ; et
un élément de sommation configuré pour soustraire une version limitée de la puissance de perte de TM cible d'une version illimitée de la puissance de perte de TM cible et fournir une puissance de freinage mécanique supplémentaire pour le dispositif de freinage mécanique (134, 136, 248).

9. Appareil selon l'une quelconque des revendications précédentes, dans lequel le au moins un moteur (106) comprend un moteur (106) de prise de puissance, PTO, pour une distribution de puissance de freinage cible du TM, la charge (103) comprend au moins un accessoire couplé au moteur de PTO (106).

10. Appareil selon l'une quelconque des revendications précédentes, dans lequel le dispositif de commande (108, 116) comprend :
une unité de calcul de puissance de freinage (204) de prise de puissance, PTO, configurée pour calculer une puissance de freinage cible de PTO selon un couple de freinage cible de PTO et une vitesse de rétroaction de PTO ; et
une unité de calcul (312) configurée pour calculer une puissance de perte cible de PTO par soustraction d'une puissance de charge d'ES cible de la puissance de freinage cible de PTO.

11. Appareil selon l'une quelconque des revendications précédentes, dans lequel le dispositif de commande (108, 116) comprend :
une unité de calcul de référence de courant (228) configurée pour générer un ordre d'amplitude de courant de prise de puissance, PTO, sur la base, au moins en partie, de la puissance de perte cible de PTO ;
une unité de régulation de couple de PTO (215) configurée pour générer un ordre de retard de phase de courant de PTO sur la base, au moins en partie, du couple de rétroaction de PTO et d'un couple cible de PTO ; et
une unité de commande de moteur de PTO (106) configurée pour générer les signaux de commande pour le convertisseur (104) sur la base, au moins en partie, de l'ordre d'amplitude de courant de PTO et de l'ordre de retard de phase de courant de PTO.

12. Appareil selon l'une quelconque des revendications précédentes, dans lequel l'appareil comprend au moins une résistance de décharge (156) fixée en association avec un accessoire de prise de puissance, PTO, le dispositif de commande (108, 116) comprend une unité de distribution de puissance préréglée configurée pour distribuer la puissance de freinage cible de PTO en une puissance de déversement cible pour la au moins une résistance de déversement (156) et une sous-puissance de freinage cible qui est une combinaison de la puissance de perte cible de PTO et de la puissance de charge de source d'énergie cible.

13. Appareil selon l'une quelconque des revendications précédentes, dans lequel le dispositif de commande (108, 116) comprend une unité (215) de calcul de couple de référence de prise de puissance, PTO, configurée pour calculer le couple cible de prise de PTO sur la base au moins en partie de la sous-puissance de freinage cible et de la vitesse de rétroaction de PTO.

14. Véhicule comprenant :
une source d'énergie (102) conçue pour fournir de la puissance électrique pendant le mode de fonctionnement de décharge et recevoir de la puissance électrique pendant le mode de fonctionnement de charge ;
un système d'entraînement électrique (101) comprenant :
un convertisseur (104) couplé à la source d'énergie (102), le convertisseur (104) étant configuré pour convertir la puissance électrique reçue de la source d'énergie (102) en puissance électrique d'entraînement et configuré pour convertir une puissance électrique régénérative en puissance électrique de charge pour charger la source d'énergie (102) ;
au moins un moteur (106) couplé au convertisseur (104), le moteur (106) étant conçu pour recevoir la puissance électrique d'entraînement fournie depuis le convertisseur (104) et fournir une puissance mécanique pour entraîner au moins une charge (103) et configuré pour convertir la puissance mécanique provenant de la charge (103) en la puissance électrique régénérative ; et
un dispositif de commande (108, 116) couplé à la source d'énergie (102), au convertisseur (104) et à au moins un moteur (106),
dans lequel le dispositif de commande (108, 116) est configuré pour envoyer des premiers signaux de commande au convertisseur (104), sur la base au moins en partie d'un premier ordre de freinage, pour permettre à une première puissance de freinage cible correspondant au premier ordre de freinage d'être uniquement chargée dans la source d'énergie (102),
dans lequel le dispositif de commande (108, 116) est en outre configuré pour envoyer des seconds signaux de commande au convertisseur (104), sur la base, au moins en partie, d'un second ordre de freinage, pour permettre à une seconde puissance de freinage cible correspondant au second ordre de freinage d'être partiellement chargée dans la source d'énergie (102) et partiellement dissipée par le au moins un moteur (106).

15. Procédé pour faire fonctionner un véhicule, comprenant :
la réception d'un couple de freinage cible pour un moteur (106) du véhicule ;
la génération d'une puissance de freinage cible sur la base, au moins en partie, du couple de freinage cible ;
la distribution de la puissance de freinage cible en une puissance de perte cible en fonction de l'état de charge d'un stockage d'énergie du véhicule ;
le calcul d'ordres de référence sur la base, au moins en partie, de la puissance de perte cible ; et
la mise en œuvre d'une commande pour générer des signaux de commande sur la base, au moins en partie, des ordres de référence pour permettre à la puissance de perte cible d'être dissipée par un système d'entraînement électrique (101) du véhicule.
